# EUROPÄISCHE PATENTSCHRIFT

(11) **EP 3 322 675 B1**
(45) Veröffentlichungstag und Bekanntmachung des Hinweises auf die Patenterteilung: **11.09.2019**
(21) Anmeldenummer: 16736133.6
(22) Anmeldetag: 06.07.2016
(51) Int. Cl.: C03B 33/02, B23K 26/00, C03B 33/04, C03B 33/09, B23K 26/53, B23K 103/00

(54) **VERFAHREN ZUM LASERGESTÜTZTEN ABTRENNEN EINES TEILSTÜCKS VON EINEM FLÄCHIGEN GLASELEMENT**
METHOD FOR THE LASER-SUPPORTED DETACHMENT OF A SECTION FROM A PLANAR GLASS ELEMENT
PROCÉDÉ POUR SÉPARER, DE MANIÈRE ASSISTÉE PAR LASER, UN FRAGMENT D'UN ÉLÉMENT EN VERRE PLAT

(30) Priorität: 15.07.2015 DE 102015111490
(43) Veröffentlichungstag der Anmeldung: 23.05.2018
(60) Teilanmeldung: 19186237.4
(73) Patentinhaber: Schott AG, 55122 Mainz (DE)
(72) Erfinder: WAGNER, Fabian, 55118 Mainz (DE); ORTNER, Andreas, 55435 Gau-Algesheim (DE); SEIDL, Albrecht, 63843 Niedernberg (DE); LENTES, Frank-Thomas, 55411 Bingen (DE); GERBAN, Jörn, 55268 Nieder-Olm (DE); SCHMITT, Simon, 65189 Wiesbaden (DE)
(74) Vertreter: Blumbach · Zinngrebe Patentanwälte PartG mbB
(86) Internationale Anmeldenummer: PCT/EP2016/066013
(87) Internationale Veröffentlichungsnummer: WO 2017/009149

(56) Entgegenhaltungen:
- EP-A1- 2 754 524
- US-A1- 2014 027 951
- US-A1- 2015 165 560
- US-A1- 2015 166 393

## Beschreibung

Die Erfindung betrifft allgemein das lasergestützte Abtrennen eines Teilstücks von einem flächigen Glaselement. Im Speziellen betrifft die Erfindung das lasergestützte Abtrennen eines Teilstücks aus dem Inneren eines flächigen Glaselements.

Aus der WO 2012/006736 A2 ist bekannt, dass mit hochenergetischen Laserpulsen in einem Glassubstrat irreversible Schädigungen in Form von Filamenten verursacht werden können und dass die Aneinanderreihung solcher Schädigungen im Glas das Trennen des Glases ermöglicht. Ein Filament entsteht durch einen ultrakurzen Laserpuls, wobei im Inneren des Glases infolge des Kerr-Effektes eine Selbstfokussierung erfolgt, bis die Energiedichte in einem Punkt so hoch wird, dass ein Plasma gezündet wird. Es kommt zu einer Plasmaexplosion, bei der das Glas irreversible Schäden rund um diese Plasmaentstehungsstelle erleidet. Von dort geht weitere Strahlung aus, die der Selbstfokussierung unterliegt und die in einer weiteren Plasmaexplosion endet. Dieser Effekt wiederholt sich je nach Intensität mehrfach. Die Energie nimmt über die gesamte Glasdicke ab, so haben die ersten Plasmaspots die größte Energie und erzeugen auch die größten Schädigungen.

Das Dokument US 2014/027951 A1 betrifft ein Verfahren zum Trennen von sprödbrüchigem Material wie Glas, Keramik oder Saphir mittels Laserstrahlung. Mit dem Verfahren können dünne Substrate mit einer Dicke von weniger als 500 µm aufgetrennt werden.

Das Dokument US 2015/165560 A1 betrifft ein Laserverfahren, welches es ermöglicht, aus einem Glassubstrat ein Innenstück herauszutrennen. Das Verfahren dient dazu, Löcher in einem dünnen Glassubstrat mit einer Dicke von 0,7 mm zu erzeugen.

Um eine Innenkontur herauszulösen, wird vorgeschlagen, zusätzliche Trennlinien zu erzeugen und einzelne Stücke herauszubrechen. Eine alternative Ausführungsform sieht vor, eine Innenkontur durch Erwärmen aufzuschmelzen und dadurch zu entfernen.

Das Dokument US 2015/166393 A1 betrifft ebenfalls ein lasergestütztes Verfahren, mit dem das Heraustrennen eines Stückes aus einem Glaselement unterstützt werden soll. Das Glaselement weist dabei eine Dicke von 0,4 oder 0,7 mm auf. Das Vereinzeln kann durch das Einbringen einer Biegekraft erfolgen. Eine weitere Ausführungsform sieht einen zusätzlichen CO2-Laser vor, der die Trennlinie abfährt und lokal thermische Spannungen erzeugt, welche zu einem schrittweisen Abtrennen führen sollen.

Das Dokument EP 2 754 524 A1 schließlich betrifft ein Verfahren zum laserbasierten Bearbeiten von flächigen Substraten aus Glas oder Haltleiterwafern unter Verwendung einer Laserquelle. Das Trennen des Materials entlang der Trennlinie erfolgt entweder durch Eigenspannung des Materials oder durch eingebrachte Kräfte.

Die DE 10 2012 110 971 A1 beschreibt ein Verfahren der Trennvorbereitung von transparenten Werkstücken, bei welchem sich quer durch das Werkstück erstreckende, aneinander gereihte Filamentstrukturen durch ultrakurze Laserpulse entlang einer Trennlinie erzeugt werden. Das Material ist dadurch entlang dieser Trennlinie perforiert und damit vorgeschädigt. In einem nachfolgenden Schritt wird die Trennung des Werkstücks ausgeführt.

Sollen von einem Werkstück bestimmte Teilstücke vollständig abgetrennt werden, wird das Material durch die Trennlinie üblicherweise in zwei vollständig voneinander abgegrenzte Bereiche eingeteilt. Bringt man nun, nachdem das Material entlang einer solchen Trennlinie filamentiert wurde, in einem weiteren Schritt eine geeignete Spannung auf das Material auf, kann das Material entlang der erzeugten Sollbruchlinie, das heißt entlang der Trennlinie, so zerteilt werden, dass daraus zum einen das abgetrennte Teilstück und zum anderen ein verbleibender Hauptteil hervorgeht. Das abgetrennte Teilstück kann typischerweise auch als Innenteil und der verbleibende Hauptteil als Außenteil bezeichnet werden.

Ist die Trennlinie geradlinig, so gestaltet sich das der Laserbearbeitung nachfolgende Abtrennen einfach. Schwieriger ist das Abtrennen demgegenüber dann, wenn die Trennlinie gebogen ist, mehrere in einem Winkel zueinander stehende Abschnitte aufweist oder sogar eine geschlossene Linie bildet. Letzterer Fall ist unter anderem dann gegeben, wenn eine Innenkontur, beziehungsweise ein Loch hergestellt werden soll. Beispielsweise tritt dieser Fall ein, wenn in eine Glasplatte ein Fenster geschnitten werden soll. Ebenfalls tritt dieser Fall auf, wenn ein Glasteil hergestellt werden soll, dessen Außenkontur vollständig durch die Trennlinie vorgegeben ist.

Das Trennen von Glas entlang allgemein gebogener, abschnittweise gewinkelter oder sogar in sich geschlossener Trennlinien ist deshalb schwierig, weil nicht ohne weiteres ein hinreichendes Biegemoment auf das Glas an der Trennlinie ausgeübt werden kann.

Eine Möglichkeit, dennoch Innenkonturen aus flächigen Substraten auszuschneiden, kann der EP 2 781 296 A1 entnommen werden. In dem dort beschriebenen Verfahren wird, nachdem entlang einer Konturlinie Risslinien eingebracht wurden (Konturdefinitionsschritt), das vom Substrat abzutrennende Teilstück mit hoher Laserleistung thermisch verformt oder geschmolzen (Materialverformungs- oder - abtragsschritt), so dass dieser Teil leichter von dem Substrat abgetrennt werden kann. Zur Unterstützung der Abtrennung können weitere, beispielsweise spiral- oder V-förmige Risslinien in das abzutrennende Teilstück eingebracht werden, um dieses in kleineren Stücken herauszuarbeiten. Nachteilig an diesem Verfahren ist zum einen der hohe Aufwand, der den wirtschaftlichen Nutzen mindert und zum anderen die Zerstörung des abzutrennenden Teilstücks, das aufgrund seiner exakten Passform zu dem übrigbleibenden Hauptteil des Substrats von Interesse sein kann. Weiterhin nachteilig an der Zerstörung des Teilstücks sind entstehende Partikel und Splitter und der somit erhöhte Reinigungsaufwand.

Der vorliegenden Erfindung liegt demnach die Aufgabe zugrunde, ein effizientes und sauberes, insbesondere splitterfreies, Abtrennen eines Teilstücks von einem flächigen Glaselement entlang nicht geradliniger Trennlinien zu ermöglichen, so dass sowohl das abgetrennte Teilstück als auch der verbleibende Hauptteil des Glaselements nicht weiter beschädigt werden.

Ein Aspekt der Aufgabe ist es, ein solches Abtrennen von innenliegenden Teilstücken entlang in sich geschlossener Trennlinien zu ermöglichen.

Ein weiterer Aspekt der Aufgabe ist es, ein solches Abtrennen unter Minimierung der Gefahr schädlicher Rissbildung sowohl im abgetrennten Teilstück als auch im verbleibenden Hauptteil des Glases zu ermöglichen.

Die Aufgabe wird bereits durch den Gegenstand der unabhängigen Ansprüche gelöst. Vorteilhafte Ausgestaltungen und Weiterbildungen der Erfindung sind in den jeweiligen unabhängigen Ansprüchen gegeben.

Das erfindungsgemäße Verfahren zum Abtrennen eines Teilstücks von einem flächigen Glaselement entlang einer vorgesehenen Trennlinie, welche das Glaselement in ein abzutrennendes Teilstück und einen zu verbleibenden Hauptteil einteilt, basiert darauf, dass nebeneinander entlang der Trennlinie filamentförmige Schädigungen im Volumen des Glaselements erzeugt werden, und die Schädigungen durch Laserpulse eines Ultrakurzpulslasers erzeugt werden, wobei das Material des Glaselements für die Laserpulse transparent ist, und die Laserpulse im Volumen des Glaselements ein Plasma erzeugen, welches die filamentförmigen Schädigungen hervorruft, und die Auftreffpunkte der Laserpulse auf dem Glaselement über dessen Oberfläche entlang der Trennlinie bewegt werden, und nach dem Einfügen der nebeneinander entlang der Trennlinie angeordneten filamentförmigen Schädigungen das Glaselement im Bereich des Hauptteils erwärmt und zum Ausdehnen gebracht wird und/oder im Bereich des Teilstücks abgekühlt und zum Zusammenziehen gebracht wird, so dass sich das Teilstück entlang der Trennlinie an den nebeneinander liegenden filamentförmigen Schädigungen von dem Hauptteil ablöst, wobei das Teilstück und der Hauptteil jeweils als Ganzes erhalten bleiben.

Durch das Ausdehnen des Hauptteils und/oder das Zusammenziehen des Teilstücks werden die Größen dieser Teile relativ zueinander unterschiedlich verändert. Im Falle des Abkühlens des Teilstücks entsteht beispielsweise ein "Schrumpf" des Teilstücks gegenüber dem Hauptteil. Durch die relative Größenänderung löst sich das Teilstück von dem Hauptteil ab.

Vorzugsweise ist vorgesehen, nach dem Einfügen der nebeneinander entlang der Trennlinie angeordneten filamentförmigen Schädigungen einen Auftreffpunkt einer Laserstrahlung, vorzugsweise eines Kohlendioxidlasers, auf dem Glaselement über dessen Oberfläche entlang der Trennlinie zu bewegen, so dass entlang der Trennlinie lokale Zugspannungen im Glas hergerufen werden, um eine Rissbildung zwischen benachbarten filamentförmigen Schädigungen zu bewirken. Ein solcher Verfahrensschritt wird auch als Cleaving-Schritt bezeichnet. Dieser Verfahrensschritt des Cleavens kann auch durch eine nach dem Erwärmen durchgeführte lokale Abkühlung unterstützt werden, um die erzeugten Zugspannungen im Material zu erhöhen.

Ein Cleaving-Schritt dient der Vortrennung. Das Glaselement wird dabei entlang der Trennlinie vorzugsweise mit einem CO₂-Laser bestrahlt, um thermomechanische Spannungen in dem Glaselement an der Trennlinie zu erzeugen. Dadurch kann eine die filamentförmigen Schädigungen verbindende Rissbildung entlang der Trennlinie erzeugt werden und somit ein zumindest abschnittsweises Auftrennen entlang der Trennlinie bewirkt werden, allerdings in der Regel ohne dass sich das Teilstück von dem Hauptteil ablöst. Insofern wird der Cleaving-Schritt vorzugsweise vor dem Verfahrensschritt des Aufwärmens im Bereich des Hauptteils und/oder des Abkühlens im Bereich des Teilstücks durchgeführt.

Sowohl die Filamentstrukturen an sich, als durch einen Cleaving-Schritt hervorgerufene zusätzliche Risse im Material stellen Vorschädigungen im Material dar, die entlang der Trennlinie verlaufen.

Die Erfindung sieht vor, dass der Hauptteil und das Teilstück jeweils als Ganzes erhalten bleiben. Vorteilhaft am Erhalt des Hauptteils und des Teilstücks jeweils als Ganzes ist, dass beide Teile weiterverwendet werden können. Je nachdem, für welchen Zweck das Trennverfahren eingesetzt wird, kann entweder der Hauptteil oder das Teilstück oder aber beide Teile im Fokus des Interesses liegen. Ist vor allem der Hauptteil von Interesse, ist der Erhalt des Teilstücks vorteilhaft, weil weniger Reste und Splitter anfallen und das Teilstück wiederum als Ausgangsmaterial verwendet werden kann, ohne dass es eingeschmolzen werden muss. Sind beide Teile von Interesse, kann ein Vorteil in der präzisen komplementären Form der beiden Teile bestehen. Zudem wird auch der Verfahrensaufwand gegenüber einem Verfahren, in welchem ein abzutrennendes Teil in mehrere kleinere Stücke zerteilt wird, deutlich reduziert.

Das für die Erfindung eingesetzte Präzisionstrennverfahren, bei dem in einen Werkstoff definierte Schädigungen auf kleinstem Raum durch Laserpulse eines Ultrakurzpuls-Lasers erzeugt werden, basiert auf der lokalen Zerstörung des Werkstoffes in der Wechselwirkungszone mit dem Laserlicht mit Erzeugung von dicht beieinander liegenden Submikron-Hohlkanälen, also Hohlkanälen mit Durchmessern von weniger als 1 Mikrometer.

Die durch die Laserpulse erzeugten filamentförmigen Schädigungen haben vorzugsweise eine Länge von mindestens 200 Mikrometern, besonders bevorzugt mindestens 500 Mikrometern. Dazu werden geeignete Pulsenergien und Pulsdauern gewählt. Die angegebenen Mindestlängen der filamentförmigen Schädigungen sind deswegen vorteilhaft, weil damit das Abtrennen des Teilstücks erleichtert wird.

Besonders vorteilhaft für die Erzeugung langer filamentförmiger Schädigungen ist ein Betrieb des Ultrakurzpuls-Lasers im sogenannten Burst-Mode. Bei diesem Betriebsmodus wird der Laserpuls nicht als Einzelpuls abgegeben, sondern als Folge kurz hintereinander abgegebener Pulse, die gemeinsam ein Pulspaket, einen sogenannten Burst, bilden. Demgemäß ist in Weiterbildung der Erfindung ein Betrieb des Ultrakurzpuls-Lasers in Form einer zeitlich nacheinander folgenden Abgabe von Laserpulsen in Form von Bursts, beziehungsweise Pulspaketen vorgesehen, wobei vorzugsweise jeder dieser Bursts jeweils eine der filamentförmigen Schädigungen erzeugt.

Ein solches Pulspaket weist im Allgemeinen eine etwas größere Energie auf, als ein Einzelpuls im üblichen Single-Shot-Betrieb. Die Pulse eines Bursts selbst beinhalten aber deutlich weniger Energie als ein Einzelpuls. Weiterhin ist typisch, dass die Pulsenergien der Pulse innerhalb eines Bursts abnehmen.

Eine geeignete Laserquelle gemäß der vorliegenden Erfindung ist ein Neodym-dotierter Yttrium-Aluminium-Granat-Laser mit einer Wellenlänge von 1064 Nanometern. Die Laserquelle arbeitet insbesondere mit einer Repetitionsrate, welche zwischen 10 kHz und 120 kHz, bevorzugt zwischen 30 kHz und 110 kHz und ganz besonders bevorzugt zwischen 35 kHz und 105 kHz liegt. Die Scangeschwindigkeit kann vorzugsweise so gewählt werden, dass abhängig von der Repetitionsrate der Abstand benachbarter filamentförmiger Schädigungen im Bereich von 4 Mikrometer bis 10 Mikrometer liegt.

Dabei liegt die geeignete Pulsdauer eines Laserpulses in einem Bereich von weniger als 100 Pikosekunden, bevorzugt bei weniger als 10 Pikosekunden. Die Pulsdauer kann auch bei weniger als 1 Pikosekunde liegen. Die typische Leistung der Laserquelle liegt dabei besonders günstig in einem Bereich von 40 bis 100 Watt. Um die filamentförmigen Schädigungen zu erzielen, wird gemäß einer vorteilhaften Weiterbildung der Erfindung eine Pulsenergie im Burst von mehr als 200 Mikrojoule eingesetzt, ferner vorteilhaft eine gesamte Burstenergie von mehr als 500 Mikrojoule.

Im Falle eines Betriebs des Ultrakurzpuls-Lasers im Burst-Modus ist die Repetitionsrate die Wiederholrate der Abgabe von Bursts. Die Pulsdauer ist im Wesentlichen unabhängig davon, ob ein Laser im Einzelpulsbetrieb oder im Burst-Mode betrieben wird. Die Pulse innerhalb eines Bursts weisen typischerweise eine ähnliche Pulslänge auf, wie ein Puls im Einzelpulsbetrieb.

Bei der für die Erfindung eingesetzten Mikroperforation wird - von winzigen Mengen abgesehen - kein Material aus der Trennfuge abgetragen. Beide zu trennenden Teile sind nach dem Einfügen der filamentartigen Schädigungen im Wesentlichen noch miteinander verbunden.

Nachdem das erfindungsgemäße Mikroperforieren durchgeführt wurde, befindet sich entlang der Trennlinie eine Sollbruchlinie in dem Material, entlang derer das Material zwar noch nicht getrennt ist, jedoch gut getrennt werden kann, wenn eine geeignete Spannung im Material hervorgerufen wird. Geeignet ist dazu insbesondere ein Cleaving-Schritt.

Grundsätzlich könnten Spannungen in einem flächigen Glassubstrat beispielsweise auch einfach dadurch erzeugt werden, dass das Substrat gebogen wird. Bei einer Biegung wird das Material in einer Hälfte seines Volumens gedehnt, wodurch in dieser Hälfte eine Zugspannung entsteht, während es gleichzeitig in der anderen Volumenhälfte gestaucht wird, wodurch dort eine Druckspannung entsteht. Dabei werden die beiden benannten Volumenhälften durch eine Ebene voneinander abgegrenzt, die mittig zwischen den beiden Oberflächen des Substrats liegt und auch als neutrale Zone bezeichnet wird, da sie weder eine Zug- noch eine Druckspannung erfährt. Das Biegen eines Glassubstrats eignet sich zur Trennung entlang einer Sollbruchlinie allerdings hauptsächlich dann, wenn die Sollbruchlinie möglichst geradlinig ist.

Demgegenüber ermöglicht es das erfindungsgemäße Erwärmen des Glaselements im Bereich des Hauptteils und/oder das Abkühlen im Bereich des Teilstücks, Zugspannungen in dem Element zu erzeugen, die im Wesentlichen durch die gesamte Dicke des Elements vorhanden sind. Das heißt es können Zugspannungen erzeugt werden, ohne gleichzeitig Druckspannungen zu erzeugen.

Eine erste erfindungsgemäße Möglichkeit ist es, durch Erwärmen des Elements ausschließlich im Bereich des Hauptteils den Hauptteil zur Ausdehnung zu bringen während das Element im Bereich des Teilstücks nicht aufgewärmt wird. Dadurch dehnt sich das Element im Bereich des Hauptteils stärker aus, als im Bereich des Teilstücks. Es kann dadurch eine Zugspannung im Glaselement entstehen, durch die sich das Teilstück entlang der Trennlinie von dem Hauptteil abtrennt. Ferner löst sich das Teilstück von dem Hauptteil ab. Sollen innenliegende Teilstücke von dem Element abgetrennt werden, kann also das Substrat aufgeheizt werden, wobei dabei die Innengeometrien ausgespart werden. Die Innengeometrien können dann bei Erreichen einer bestimmten Temperatur entnommen werden.

Ein Beispiel, das Aufheizen des Glaselements ohne die Innengeometrien zu realisieren ist das Aufheizen mittels einer Heizplatte, die bei den Innengeometrien ausgespart ist. Es sind darüber hinaus aber auch viele andere Möglichkeiten denkbar, das Glaselement ausschließlich im Bereich des Hauptteils aufzuwärmen, beispielsweise kann es durch Lichteinwirkung aufgewärmt werden, während das Teilstück abgedeckt wird. Der Hauptteil kann auch mit einem warmen Fluid angeblasen bzw. angestrahlt werden oder mittels eines über den Hauptteil geführten CO2-Lasers erwärmt werden.

Eine zweite erfindungsgemäße Möglichkeit ist es, durch Erwärmen des Elements im Bereich des Hauptteils den Hauptteil zur Ausdehnung zu bringen und das Element durch Abkühlen im Bereich des Teilstücks zum Zusammenziehen zu bringen. Auf diese Weise kann die Zugspannung im Material noch erhöht werden.

Ein Beispiel im Falle von innenliegenden Teilstücken ist es, das Aufheizen des Glaselements mittels einer Heizplatte zu realisieren, bei der die Innengeometrien ausgespart sind und durch die Aussparungen das Element mit Luft anzublasen, so dass dieses zusätzlich im Bereich der Innengeometrie gekühlt wird. Es ist auch möglich, das Element im Bereich der Innengeometrie durch andere Fluide als Luft zu kühlen, oder eine Kühlplatte zu verwenden.

Das Aufwärmen des Elements im Bereich des Hauptteils und das Abkühlen im Bereich des Teilstücks können, müssen aber nicht gleichzeitig erfolgen. Es kann zum Beispiel auch das Glaselement in seiner Gesamtheit erwärmt werden (wodurch es folglich auch im Bereich des Hauptteils erwärmt wird) und anschließend im Bereich des Teilstücks abgekühlt werden. Auch das umgekehrte Vorgehen, das Element vollständig abzukühlen und dann im Bereich des Hauptteils aufzuwärmen, ist denkbar.

Eine dritte erfindungsgemäße Möglichkeit ist es, durch Abkühlen des Elements ausschließlich im Bereich des Teilstücks das Teilstück zum Zusammenziehen zu bringen, während das Element im Bereich des Hauptteils nicht abgekühlt wird.

Erfindungsgemäß wird das Teilstück jedenfalls ohne zusätzliche Hilfsschnitte innerhalb des Teilstücks von dem Hauptteil abgetrennt. Vorteilhaft an der Vermeidung zusätzlicher Hilfsschnitte ist, dass sich Zugspannungen in dem Glaselement, die infolge eines Aufwärmens und/oder Abkühlens entstehen können, nicht auf solche zusätzlichen Hilfsschnitte aufteilen sondern ihr volle Wirkung an der gewünschten Trennlinie entfalten. Erfindungsgemäß wird also weder das Teilstück noch der Hauptteil über die Schädigungen durch das Einbringen der Filamente entlang der Trennlinie hinaus beschädigt. Nach dem Ablösen weisen der Hauptteil und das Teilstück lediglich die eingebrachten Schädigungen an ihren Schnittkanten auf.

Durch das eingesetzte Präzisionstrennverfahren mittels Mikroperforation wird dabei an den Schnittkanten eine sehr hohe Kantenqualität erreicht. Da die Beschaffenheit der Glaskante für die Biegefestigkeit eines Glaselements von großer Bedeutung ist, führt eine hohe Kantenqualität auch zu einer erhöhten Biegefestigkeit des Hauptteils und des Teilstücks. Mit anderen Worten trägt eine möglichst saubere Glaskante mit möglichst wenigen und möglichst kleinen, vorzugsweise keinen Aussplitterungen, Einkerbungen und sonstigen Unebenheiten zur Verminderung der Gefahr von Glasbruch bei.

Wenn das Glaselement im Bereich des Hauptteils aufgewärmt wird, kann dieser Schritt in einen sich gegebenenfalls anschließenden Vorspannprozess oder Keramisierungsprozess des Hauptteils integriert werden.

In einer Weiterbildung der Erfindung wird das Glaselement im Bereich des Hauptteils erwärmt und zum Ausdehnen gebracht und/oder im Bereich des Teilstücks abgekühlt und zum Zusammenziehen gebracht, wobei zwischen der durchschnittlichen Temperatur des Hauptteils und der durchschnittlichen Temperatur des Teilstücks eine Temperaturdifferenz hervorgerufen wird, die mindestens 150 Grad Celsius, vorzugsweise mindestens 200 Grad Celsius, besonders bevorzugt mindestens 300 Grad Celsius beträgt.

In einer Weiterbildung der Erfindung wird das Glaselement im Bereich des Hauptteils erwärmt und zum Ausdehnen gebracht, und nachdem sich das Teilstück entlang der Trennlinie an den nebeneinander liegenden filamentförmigen Schädigungen von dem Hauptteil abgelöst hat, der Hauptteil unter Ausnutzung der erfolgten Erwärmung thermisch vorgespannt.

In dieser Weiterbildung der Erfindung werden die bereits erwärmten Teile des Glaselements direkt vorgespannt, wodurch keine weiteren hohen Energiekosten entstehen. Das heißt, der Hauptteil wird auf energieeffiziente Weise thermisch vorgespannt. Das sich der Abtrennung unmittelbar anschließende Vorspannen der erwärmten Teile wird insbesondere durch das eingesetzte Präzisionstrennverfahren mittels Filamentieren ermöglicht, wodurch eine hohe Kantenqualität entsteht. Dadurch ist es insbesondere nicht zwingend, die durch das Abtrennen des Teilstücks von dem Hauptteil erzeugte Kante zu schleifen oder anderweitig zu bearbeiten.

Ferner ist es auch möglich, den Hauptteil unter Ausnutzung der erzeugten Erwärmung zu keramisieren. Auf diese Weise kann der Hauptteil auf energieeffiziente Weise keramisiert, das heißt zu einem Glas-Kristall-Mischkörper umgewandelt werden. Es ist somit aus Energiespargründen vorteilhaft, das Keramisieren im Anschluss an den Abtrennprozess durchzuführen.

Eine Prozesskette kann demnach beispielsweise wie folgt realisiert werden: Zunächst wird das Glaselement entlang mindestens einer definierten Trennlinie durch Laserpulse filamentiert, das heißt mikroperforiert. Mindestens eine dieser Trennlinien beschreibt dabei eine nicht geradlinige Trennlinie im Sinne dieser Erfindung - in diesem Beispiel soll von einer Innenkontur ausgegangen werden, welche das Teilstück repräsentiert. Es kann ferner weitere Trennlinien geben, beispielsweise Außenkonturen, entlang derer das Glaselement zunächst auf eine andere Weise, als gemäß dem erfindungsgemäßen Verfahren getrennt wird, beispielsweise durch Aufbringen von Spannungen im Glaselement durch Biegen oder durch Bestrahlen mit einem CO₂-Laser. Die Kanten, die durch das Trennen entlang dieser weiteren Trennlinien entstehen, können nach dem Trennen geschliffen werden, so kann beispielsweise ein sogenannter C-Schliff erfolgen. Weitere optionale Schritte können das Reinigen und Bedrucken des Glaselements sein. Es wird dann vorzugsweise ein Cleaving-Schritt entlang der Trennlinie der Innenkontur durchgeführt, durch den die Filamente miteinander verbunden werden, so dass sich die Innenkontur von dem Hauptteil abtrennt, ohne sich allerdings von dem Hauptteil abzulösen. Sodann wird mittels des erfindungsgemäßen Verfahrens das Teilstück von dem Hauptteil abgelöst, indem der Hauptteil erwärmt und zum Ausdehnen gebracht wird. Dabei wird die Innenkontur herausgelöst, wobei sowohl die an dem Teilstück als auch an dem Hauptteil entstehende Schnittkante sehr hohe Kantenqualitäten aufweisen, insbesondere charakterisiert durch ein Chipping von kleiner als 10 Mikrometer, besonders bevorzugt von kleiner als 5 Mikrometer und einer Rauheit mit einem Rz-Wert von kleiner als 30 Mikrometer, vorzugsweise 20 Mikrometer, besonders bevorzugt 10 Mikrometer. Schließlich wird der Hauptteil unter Ausnutzung der bereits zur Trennung durchgeführten Erwärmung thermisch vorgespannt. Der Hauptteil kann auch unter Ausnutzung der erfolgten Erwärmung keramisiert werden. Anschließend können die Haupt- und/oder Teilstücke des Glaselements verpackt werden.

Die thermische Vorspannung, beziehungsweise die thermische Härtung basiert darauf, dass das zu härtende Glaselement abgeschreckt wird. Dabei kühlt zunächst die Oberfläche des Elements ab, während sich im Inneren noch eine wärmere oder weichere Phase befindet. Die Temperaturdifferenz zur Umgebung ist dann innen größer als außen. Das Innere des Glaselements würde sich im Folgenden mehr zusammenziehen, was allerdings durch die bereits feste Oberfläche verhindert wird. Dadurch kommt es im Inneren zu einer Zugspannung, während sich an der Oberfläche eine Druckspannung ausbildet.

Ein Vorteil des thermischen Vorspannens ist es, dass es sich um eine vergleichsweise preisgünstige Methode zur Erhöhung der Festigkeit handelt. Auf diese Weise wird in dieser Weiterbildung der Erfindung also ein effizientes Verfahren zum Abtrennen und anschließenden Vorspannen bereitgestellt. So wird der wirtschaftliche Nutzen dieser Weiterbildung der Erfindung erhöht. Andererseits können thermisch vorgespannte Glaselemente in der Regel nicht mehr gut geschnitten und getrennt werden. Das Mikroperforieren, Schneiden und Trennen, nachdem das Vorspannen erfolgt ist, ist jedoch in dieser Weiterbildung der Erfindung gerade nicht unbedingt notwendig, da alle erforderlichen Trennschritte bereits zuvor im noch ungespannten Glaselement durchgeführt werden können. Dies betrifft - entsprechend der oben beschriebenen beispielhaften Prozesskette - sowohl Trennungen entlang nicht geradliniger Trennlinien im Sinne dieser Erfindung, als auch gegebenenfalls weiterer Trennlinien, entlang derer die Trennung auch mit herkömmlichen Verfahren erfolgen kann.

Das in der EP 2 781 296 A1 beschriebene Verfahren kann auch für Gläser mit gehärteten oder vorgespannten Oberflächen verwendet werden. Nachteilig dabei ist allerdings, dass solche Gläser - wie zuvor dargelegt - nicht mehr gut geschnitten werden können und leichter zerreißen als ungehärtete bzw. nicht vorgespannte Gläser, so dass die Gefahr schädlicher Rissbildung während des dortigen Konturdefinitionsschritts erhöht ist. Darüber hinaus müssen die Laserparameter wie Laserleistung und Schnittgeschwindigkeit recht genau eingehalten werden. Diese Nachteile werden durch die beschriebene Weiterbildung der vorliegenden Erfindung vermieden.

In einer Weiterbildung der Erfindung besitzt das Material des Glaselements einen Wärmeausdehnungskoeffizienten, der größer als 3×10⁻⁶ K⁻¹, vorzugsweise größer als 4×10⁻⁶ K⁻¹, besonders bevorzugt größer als 7×10⁻⁶ K⁻¹ ist.

Der Wärmeausdehnungskoeffizient eines Glases ist ein Parameter, der angibt, wie sich die Abmessungen eines entsprechenden Glaselements infolge des Ausdehnens oder Zusammenziehens durch Veränderung der Temperatur verändert. Unter dem Wärmeausdehnungskoeffizienten ist der lineare Ausdehnungskoeffizient α=(1/L) (ΔL/ΔT) zu verstehen, wobei ΔT die Temperaturdifferenz bezeichnet und ΔL die Änderung entlang einer Lineardimension der Ursprungslänge L.

In einer Weiterbildung der Erfindung weist das Glaselement eine Dicke von mindestens 2 Millimetern, vorzugsweise von mindestens 3 Millimetern, besonders bevorzugt von mindestens 4 Millimetern, noch bevorzugter von mindestens 5 Millimetern auf. Das erfindungsgemäße Verfahren zum lasergestützten Abtrennen eines Teilstücks von einem flächigen Glaselement eignet sich insbesondere für flächige Elemente mit den vorgenannten Dicken. Demgegenüber ist das Trennen von Glas entlang allgemein gebogener, abschnittweise gewinkelter oder sogar in sich geschlossener Sollbruchlinien mittels herkömmlicher Trennverfahren, beispielsweise dem Ausüben eines Biegemoments, mit steigender Dicke des Glases immer schwieriger. Das liegt darin begründet, dass bei herkömmlichen Trennverfahren mit zunehmender Susbtratdicke das Risiko der Verkantung zwischen den noch in Kontakt stehenden Teilen immer größer wird. Daher kann eine sichere Trennung auf herkömmliche Weise bei dickeren Glaselementen schwierig oder sogar unmöglich werden.

Das in der EP 2 781 296 A1 beschriebene Verfahren sieht vor, die abzutrennende Kontur aufgrund eines thermischinduzierten Fließens des Substratmaterials im bestrahlten Bereich zu einer schwerkraftbedingten tropfenförmigen Ausbeulung zu bringen, um dadurch ein Spalt zum restlichen Substratmaterial zu bilden. Nachteilig an diesem Verfahren ist jedoch, dass es sich nur für begrenzte Glasdicken eignet. Ist nämlich das Glas zu dick, wird der Effekt der Spaltbildung durch das Fließen des Materials gegenüber einer Ausdehnung infolge der Erwärmung der abzutrennenden Kontur in der Ebene des Substrats immer schwächer. Demgegenüber eignet sich das hiesige erfindungsgemäße Verfahren zum lasergestützten Abtrennen eines Teilstücks von einem flächigen Glaselement insbesondere für dickere Glaselemente. Es können auch Gläser mit einer Dicke über 5 Millimeter bearbeitet werden, insbesondere können auch Dicken von über 8 Millimetern erfolgreich bearbeitet werden.

Das Glaselement weist weiterhin vorzugsweise eine Dicke von höchstens 20 Millimeter, noch bevorzugter von höchstens 15 Millimeter und besonders bevorzugt von höchstens 10 Millimetern auf. Gläser mit diesen Maximaldicken in den vorstehend genannten Bereichen eignen sich noch gut zum Zerteilen und sicheren Trennen der Teile durch das erfindungsgemäße Verfahren.

Bei dickeren Glaselementen ist es oft nicht mehr möglich oder zumindest ungünstig, die Mikroperforation über die gesamte Dicke in einem Bearbeitungsschritt, beziehungsweise mit einmaligem Entlangbewegen des Auftreffpunkts des Laserstrahls entlang der Trennlinie durchzuführen. Um eine einfache und sichere Abtrennung des Teilstücks zu ermöglichen, ist es vielmehr günstig, zwei oder mehr Überfahrten in unterschiedlichen Fokustiefen durchzuführen.

In einer Weiterbildung der Erfindung ist vorgesehen, nebeneinander entlang einer von der Trennlinie an jedem Punkt der Trennlinie um mindestens 5 und höchstens 50, vorzugsweise höchstens 40, besonders bevorzugt höchstens 30 Mikrometer beabstandeten Versatzlinie filamentförmige Schädigungen im Volumen des Glaselements zu erzeugen, deren Projektion auf die Längsrichtung der entlang der Trennlinie erzeugten filamentförmigen Schädigungen eine Überlappung mit den entlang der Trennlinie erzeugten filamentförmigen Schädigungen von weniger als 200, vorzugsweise weniger als 100, vorzugsweise weniger als 50 Mikrometer aufweisen.

Ferner können in analoger Weise entlang einer zweiten Versatzlinie, welche von der ersten Versatzlinie beabstandet ist, filamentförmige Schädigungen im Volumen des Glaselements erzeugt werden.

In einer Weiterbildung der Erfindung hat das Teilstück entlang einer ersten lateralen Dimension eine kleinste Abmessung von mindestens 5 Millimetern, vorzugsweise von mindestens 10 Millimetern, besonders bevorzugt von mindestens 20 Millimetern und entlang einer zweiten lateralen Dimension, die orthogonal zur ersten lateralen Dimension ist, eine kleinste Abmessung von mindestens 5 Millimetern, vorzugsweise von mindestens 10 Millimetern, besonders bevorzugt von mindestens 20 Millimetern.

Es ist vorteilhaft, wenn das abzutrennende Teilstück entlang der beiden lateralen Dimensionen, das heißt entlang der beiden Dimensionen, die parallel zum flächigen Glaselement, also in der Ebene des Elements verlaufen, jeweils eine gewisse Mindestausdehnung hat. Dem liegt zugrunde, dass das im vorliegenden Verfahren herbeigeführte relative Ausdehnen des Hauptteils im Verhältnis zum Teilstück (oder auch das Zusammenziehen des Teilstücks gegenüber dem Hauptteil) zu einer umso größeren Zugspannung führt, je größer das abzutrennende Teilstück ist. Auch im Fall eines zusätzlich durchgeführten Cleaving-Schritts ist eine gewisse Mindestausdehnung, insbesondere bei innenliegenden Teilstücken (Innenkonturen) von Vorteil, wie nachfolgend an einem Beispiel erläutert wird.

Dies kann man sich beispielsweise dadurch veranschaulichen, dass man annimmt, das Teilstück sei entlang der Trennlinie von dem Hauptteil bereits vollständig durch einen Cleaving-Schritt getrennt, also nicht nur mikroperforiert. Wenn das Teilstück nun beispielsweise ein im Inneren des Hauptteils befindliches Quadrat mit Abmessungen von 10 mal 10 Millimetern ist, führt ein Ausdehnen des Hauptteils oder ein Zusammenziehen des Teilstücks um 10 Prozent zu einer gesamten Spaltbreite von einem Millimeter in jeder lateralen Dimension, also von 0,5 Millimetern rings um das quadratische Teilstück herum. Nimmt man demgegenüber an, das Teilstück habe lediglich Abmessungen von 1 mal 1 Millimeter, würde sich nur eine Spaltbreite von 0,05 Millimetern ergeben.

Die durch die Temperaturdifferenz zwischen dem Hauptteil und dem Teilstück erzeugte Zugspannung (im Fall ohne einen Cleaving-Schritt) oder die hervorgerufene Spaltbreite (im Fall mit einem Cleaving-Schritt) ist umso größer, je größer die Fläche des Teilstücks ist. Es hat sich als vorteilhaft erwiesen, wenn die kleinste Abmessung, die das Teilstück jeweils entlang einer der beiden lateralen Dimensionen aufweist, mindestens 5 Millimeter, vorzugsweise mindestens 10 Millimeter, besonders bevorzugt mindestens 20 Millimeter beträgt. Ab solchen Abmessungen kann bei vielen Glasmaterialen eine Ablösung dadurch erzeugt werden, dass das Material im Bereich des Hauptteils bis auf eine Temperatur unterhalb der Glasübergangstemperatur aufgewärmt wird während es im Bereich des Teilstücks auf Raumtemperatur bleibt und dort gegebenenfalls durch Anblasen mit Luft zusätzlich gekühlt wird.

Es ist allerdings - obwohl vorteilhaft - nicht zwingend notwendig, dass das Teilstück die genannten Abmessungen überschreitet. Das Teilstück kann beispielsweise auch durch Kühlung mittels spezieller Kühlfluide wie z.b. Stickstoff, Verwendung von Kühlplatten, etc. sehr viel stärker abgekühlt werden, so dass eine zur Abtrennung ausreichende Zugspannung auch bei kleineren Teilstücken entsteht. Je nach Glas kann auch die Glassübergangstemperatur so hoch liegen, dass eine stärkere Erwärmung des Hauptteils ohne dauerhafte Deformation möglich ist, so dass ebenfalls kleinere Teilstücke abgetrennt werden können.

Es ist ferner außerdem möglich, das Glaselement im Bereich des Hauptteils ungleichmäßig zu erwärmen und/oder im Bereich des Teilstücks ungleichmäßig abzukühlen. Beispielsweise können Ausläufer oder Zungen des Teilstücks stärker gekühlt werden.

Das gewünschte Ablösen des Teilstücks von dem Hauptteil im Rahmen des erfindungsgemäßen Verfahrens hängt von verschiedenen Parametern ab. Ein wichtiger Parameter ist die kleinste Abmessung L des Teilstücks entlang der ersten oder entlang der zweiten lateralen Dimension. Ein anderer wichtiger Parameter ist die Temperaturdifferenz ΔT in Kelvin, die zwischen der durchschnittlichen Temperatur des Hauptteils und der durchschnittlichen Temperatur des Teilstücks im erfindungsgemäßen Verfahren hervorgerufen wird. Ein weiterer wichtiger Parameter ist der (lineare) Wärmeausdehnungskoeffizient α(=(1/L) (ΔL/ΔT) des verwendeten Glases. Mit diesen drei Parametern kann nunmehr auf einfache Weise die kleinste Spaltbreite S, die infolge des Aufwärmens und/oder Abkühlens im Rahmen des erfindungsgemäßen Verfahrens zwischen dem Hauptteil und dem Teilstück entsteht, abgeschätzt werden: S=ΔL/2=L·ΔT·α/2. In vorteilhafter Weise werden die Parameter L, ΔT und α so aufeinander abgestimmt, dass die kleinste Spaltbreite S größer ist als die mittlere Rauheit R der Kantenfläche des Teilstücks, an der das Teilstück von dem Hauptteil abgelöst wird. Die mittlere Rauheit R gibt dabei, gemäß einer üblichen Definition, den mittleren Abstand eines Punktes auf der Kantenfläche zu einer Mittelungsfläche an, wobei die Mittelungsfläche der idealen Kantenfläche entspricht, oder - mathematisch gesprochen - das wirkliche Profil der Kantenfläche so schneidet, dass die Summe der Abweichungen des wirklichen Profils bezogen auf die Mittelungsfläche minimal wird.

In einer Weiterbildung des erfindungsgemäßen Verfahrens ist demnach vorgesehen, dass die kleinste Abmessung L des Teilstücks in der Ebene des flächigen Glaselements, die Temperaturdifferenz ΔT in Kelvin, die zwischen der durchschnittlichen Temperatur des Hauptteils und der durchschnittlichen Temperatur des Teilstücks hervorgerufen wird, der Wärmeausdehnungskoeffizient α, den das Material des Glaselements besitzt, und die mittlere Rauheit R der Kantenfläche des Teilstücks, an der sich das Teilstück von dem Hauptteil abtrennt, die Ungleichung L·ΔT·α > R erfüllt.

In einer Weiterbildung der Erfindung wird das Glaselement durch die Trennlinie so eingeteilt, dass der Hauptteil in der Ebene des flächigen Glaselements eine zweidimensionale Form annimmt, die nicht sternförmig im mathematisch-topologischen Sinne ist.

Das Trennen von Glas entlang allgemein gebogener oder abschnittweise gewinkelter Sollbruchlinien mittels herkömmlicher Trennverfahren wird umso schwieriger, je stärker die Trennlinie in sich gebogen oder entsprechend gewinkelt ist. Besonders schwierig wird das Abtrennen eines Teilstücks schon dann - abgesehen von einem innenliegenden Teilstück mit einer in sich geschlossenen Trennlinie -, wenn das Teilstück teilweise oder fast innenliegend ist, die Trennlinie also noch nicht ganz geschlossen ist. Ein Kriterium für eine solche Situation ist, dass das zweidimensionale Gebiet, das dem Hauptteil des Glaselements entspricht, mathematisch gesprochen kein Sterngebiet mehr ist. Das bedeutet, dass es innerhalb dieses zweidimensionalen Gebietes keinen Punkt gibt, von dem aus jeder beliebige andere Punkt des Gebietes mit einer geraden Verbindungsstrecke, die vollständig in dem Gebiet liegt, erreicht werden kann.

Während manche herkömmlichen Trennverfahren in besondere Schwierigkeiten laufen, wenn der Hauptteil des Glaselements nicht sternförmig im mathematisch-topologischen Sinne ist, eignet sich die vorliegende Erfindung für solche Situationen insbesondere.

Während der Hauptteil ohne Weiteres eine Form annehmen kann, die nicht sternförmig ist, ist es für ein möglichst sauberes Abtrennen von Vorteil - wenn auch nicht zwingend nötig -, wenn das Teilstück eine Form annimmt, die sternförmig ist. Dies liegt darin begründet, dass das zweidimensionale Gebiet, das dem Teilstück entspricht, dann über mindestens einen Punkt verfügt, von dem aus jeder beliebige andere Punkt des Gebietes mit einer geraden Verbindungsstrecke, die vollständig in dem Gebiet liegt, erreicht werden kann. Bezüglich eines solchen Sternpunktes kann das Gebiet demzufolge kontrahiert werden, ohne dass es bei der Kontraktion zu Verhakungen mit dem Gebiet kommt, das dem Hauptteil entspricht. Die beschriebene Kontraktion des Gebietes kann verstanden werden als Entsprechung zu einem Abkühlen des Teilstücks.

Einige beispielhafte mathematisch gesprochen sternförmige zweidimensionale Formen, die das Teilstück in der Ebene des Glaselements annehmen kann, sind die eines regelmäßiges Vielecks, eines regelmäßiges Vielecks mit abgerundeten Ecken, eines Ovals oder eines Kreises.

In einer Weiterbildung der Erfindung wird das Glaselement durch die Trennlinie so eingeteilt, dass der Hauptteil das Teilstück in der Ebene des flächigen Glaselements vollständig umschließt.

Das Trennen von Glas entlang in sich geschlossener Trennlinien, das heißt das Abtrennen eines in der zweidimensionalen Fläche innenliegenden Teilstücks, oder anders ausgedrückt, das Herstellen von Löchern oder Ausschnitten in einem flächigen Glaselement, stellt für herkömmliche Trennverfahren eine Schwierigkeit dar. Dies liegt unter anderem an der zuvor beschriebenen Problematik, ein Biegemoment aufzubringen, aber auch daran, dass mitunter kaum oder gar kein Material bei der Mikroperforation durch die Laserpulse entfernt wird. Die vorliegende Erfindung eignet sich demgegenüber für solche Situationen insbesondere.

Das vorliegende Verfahren lässt sich auf fast jegliche Form eines innenliegenden Teilstücks, oder anders gesagt, der Innenkontur, oder der in sich geschlossenen Trennlinie, übertragen. Wie oben erläutert, ist es für ein möglichst sauberes Abtrennen von Vorteil - wenn auch nicht zwingend nötig -, wenn das Teilstück in der Ebene des flächigen Glaselements eine zweidimensionale Form aufweist, die sternförmig ist. Beispielsweise können runde, einfache eckige oder noch komplexer geformte Teilstücke aus dem Glaselement entnommen werden.

In einer Weiterbildung der Erfindung werden die Laserpulse schräg auf die Oberfläche des Glaselements gerichtet, so dass die Lichtausbreitungsrichtung der Laserpulse und damit auch die Längsrichtung der filamentförmigen Schädigungen schräg zur Oberfläche verlaufen und außerdem die Trennlinie schräg, vorzugsweise senkrecht zur Lichteinfallsebene verläuft. Die Lichteinfallsebene wird durch die Ausbreitungsrichtung des Laserstrahls und die Oberflächennormale aufgespannt.

Mit anderen Worten werden also die Schädigungskanäle so eingefügt, dass deren Längsrichtung von der Normalenrichtung der Oberfläche des Glaselements abweicht. Es ergibt sich mithin eine schräge Schnitt- oder Trennfläche zwischen den zu trennenden Teilen.

Das Erzeugen schräg verlaufender filamentförmiger Schädigungen, oder anders ausgedrückt, das winklige Anstellen der Perforierung in das Material kann das Heraustrennen eines Teilstücks erleichtern, weil dadurch anstelle einer Passung ein gewisser Öffnungswinkel existiert, durch den das Verkantungsrisiko weiter verringert wird.

Werden dickere Gläser mit mehreren Überfahrten durch eine Laserbearbeitungsvorrichtung bearbeitet, werden dabei typischerweise unterschiedlichen Fokustiefen verwendet. Das bedeutet, wenn die Länge der gebildeten Filamente nicht ausreicht, um das Glas in seiner gesamten Dicke zu durchqueren, werden mehrere Überfahrten mit dem Laser über die Trennlinie durchgeführt, um Filamente in unterschiedlichen Tiefen zu erzeugen. Bei größeren Fokustiefen, das heißt je weiter die Schädigungskanäle von der Eintrittsseite im Glas entfernt sind, kann es dazu kommen, dass die Längen der filamentförmigen Schädigungen kürzer werden. Ursächlich dafür ist, dass Teile der Laserstrahlung durch das Verwenden eines Anstellwinkels von der Substratoberfläche reflektiert werden. Unter einem Anstellwinkel ist dabei ein von Null verschiedener Winkel zwischen der Oberflächennormalen des Glaselements und der Einfallsrichtung der Laserpulse zu verstehen. Bei dickeren Gläsern ist es demnach oft vorteilhaft, den Anstellwinkel klein zu halten. Auch bei kleinen Anstellwinkeln ist ein Herauslösen ohne Verkantungsrisiko in der Regel bereits durch das erfindungsgemäße Verfahren möglich.

Eines vieler Anwendungsbeispiele des Herauslösens von Innengeometrien ist das Erzeugen von Hob-Tops aus Glas, beispielsweise Kalknatronglas. Hierbei wird zudem das Kalknatronglas wie oben beschrieben vorgespannt.

Mit dem erfindungsgemäßen Verfahren ist ein erfindungsgemäßes Erzeugnis in Form eines Satzes aus zwei flächigen, das heißt platten- oder scheibenförmigen, Glaselementen herstellbar.

Der erfindungsgemäße Satz aus zwei flächigen Glaselementen zeichnet sich dadurch aus, dass die zweidimensionale Form, die das eine der flächigen Glaselemente in seiner Ebene aufweist, komplementär ist zu der zweidimensionalen Form, die das andere der flächigen Glaselemente in seiner Ebene aufweist, und wobei zwei Kanten des einen flächigen Glaselements, welche den Übergang zwischen den Seitenflächen und einer diese Seitenflächen verbindenden Kantenfläche bilden, jeweils eine gleiche Form aufweisen, wie zwei Kanten des anderen flächigen Glaselements, welche den Übergang zwischen den Seitenflächen und einer diese Seitenflächen verbindenden Kantenfläche bilden, und wobei in diesen Kantenflächen der zwei flächigen Glaselemente jeweils nebeneinander verlaufende filamentförmige Schädigungen vorhanden sind, die Vertiefungen in diesen Kantenflächen bilden, wobei die Längsrichtung der filamentförmigen Schädigungen jeweils in Richtung von einer Kante zur anderen Kante verläuft.

Theoretisch könnte demnach das eine flächige Glaselement passgenau mit dem anderen flächigen Glaselement zusammengefügt werden, wenn man von Reibungs- und Verkantungsproblemen absieht.

In einer Weiterbildung der Erfindung umschließt die zweidimensionale Form, die das eine der flächigen Glaselemente in seiner Ebene aufweist, die zweidimensionale Form, die das andere der flächigen Glaselemente in seiner Ebene aufweist.

In einer Weiterbildung der Erfindung ist das eine der flächigen Glaselemente thermisch vorgespannt. In dieser Weiterbildung der Erfindung kann vorgesehen sein, dass das vorgespannte flächige Glaselement durch das thermische Vorspannen in einem Zustand leicht vergrößerter Ausdehnung verbleibt. Demgemäß kann es in dieser Weiterbildung der Erfindung nicht nur theoretisch sondern auch praktisch möglich sein, das eine flächige Glaselement passgenau mit dem anderen flächigen Glaselement zusammenzufügen, da Reibungs- und Verkantungsprobleme durch die erzeugte leichte Vergrößerung des einen flächigen Glaselements durch das Vorspannen vermieden werden. Ein solcher Satz aus zwei flächigen Glaselementen, die passgenau zusammengefügt werden können, kann so präzise zusammenpassen, dass er flüssigkeitsdicht ist. Dies kann man sich zunutze machen, beispielsweise zur Herstellung flüssigkeitsdichter Verschlüsse aus Glas.

Es kann auch vorgesehen sein, dass eines oder beide der flächigen Glaselemente an der Kantenfläche, die über filamentförmige Schädigungen verfügt, geschliffen wird. Dadurch kann es ebenfalls ermöglicht werden, dass ein Zusammenfügen in der Praxis möglich wird.

Es kann ferner eines der flächigen Glaselemente des erfindungsgemäßen Satz aus zwei flächigen Glaselementen keramisiert sein.

Mit der Weiterbildung des erfindungsgemäßen Verfahrens, in der mehrere Laserbearbeitungsschritte in verschiedenen Fokustiefen zum Einsatz kommen, ist ein erfindungsgemäßes Erzeugnis in Form eines flächigen, das heißt platten- oder scheibenförmigen, Glaselements herstellbar.

Ein durch das erfindungsgemässe Verfahren hergestelltes flächiges Glaselement zeichnet sich dadurch aus, dass in einer Kantenfläche nebeneinander verlaufende filamentförmige Schädigungen vorhanden sind, die Vertiefungen in der Kantenfläche bilden, wobei die Längsrichtung der filamentförmigen Schädigungen in Richtung von einer Kante zur anderen Kante verläuft, welche den Übergang zwischen der Kantenfläche und den Seitenflächen des flächigen Glaselements bilden, und wobei die Kantenfläche zumindest einen entlang der gesamten Kantenfläche verlaufenden Versatz aufweist, welcher im Wesentlichen senkrecht zu der Längsrichtung der filamentförmige Schädigungen verläuft, und wobei der Versatz eine Stufe von mindestens 2 Mikrometer und höchstens 30 Mikrometern darstellt.

Ein erfindungsgemäßes Verfahren zum Entfernen eines Teilstücks von einem flächigen Glaselement gemäß noch einer Ausführungsform der Erfindung basiert darauf, dass eine Trennlinie definiert wird, die das Glaselement in das zu entfernende Teilstück und einen zu verbleibenden Hauptteil einteilt, und nebeneinander entlang der Trennlinie filamentförmige Schädigungen im Volumen des Glaselements erzeugt werden, und die Schädigungen durch Laserpulse eines Ultrakurzpulslasers erzeugt werden, wobei das Material des Glaselements für die Laserpulse transparent ist, und die Laserpulse im Volumen des Glaselements ein Plasma erzeugen, welches die filamentförmigen Schädigungen hervorruft, und die Auftreffpunkte der Laserpulse auf dem Glaselement über dessen Oberfläche entlang der Trennlinie bewegt werden, und nach dem Einfügen der nebeneinander entlang der Trennlinie angeordneten filamentförmigen Schädigungen das Glaselement vorgespannt wird, und nach dem Vorspannen des Glaselements im Bereich des Teilstücks eine Rissbildung ausgelöst wird, deren Ausbreitung durch die entlang der Trennlinie aufgereihten nebeneinander liegenden filamentförmigen Schädigungen begrenzt wird, so dass das Teilstück entlang der Trennlinie an den nebeneinander liegenden filamentförmigen Schädigungen von dem Hauptteil entfernt werden kann, wobei der Hauptteil als Ganzes erhalten bleibt.

Bei dem Verfahren zum Entfernen eines Teilstücks von einem flächigen Glaselement wird das ganze Substrat, das heißt das ganze Glaselement, vorgespannt. Das Vorspannen kann auf unterschiedliche Weisen geschehen, beispielsweise thermisch oder chemisch. Nach dem Vorspannen wird innerhalb des Teilstücks ein Selbstbruch ausgelöst, wobei die Filamentierung als Ausbreitungsgrenze für die resultierenden Risse wirkt. Dadurch zerfallen nur die Teilstücke in kleine Glasstücke, wie es zum Beispiel von thermisch vorgespannten Einscheiben-Sicherheitsglas bekannt ist. Vorzugsweise hat das Teilstück in der Ebene des flächigen Glaselements eine Form, die einfach zusammenhängend ist. Es ist nicht notwendig, kann aber vorteilhaft sein, wenn die zweidimensionale Form sternförmig oder sogar konvex ist.

Die Erfindung wird nachfolgend genauer anhand der beigeschlossenen Figuren erläutert. In den Figuren bezeichnen gleiche Bezugszeichen dabei gleiche oder entsprechende Elemente.

Es zeigen:
Fig.1 schematisch in perspektivischer Ansicht eine Laserbearbeitungsvorrichtung zur Erzeugung filamentförmiger Schädigungen entlang verschiedener Trennlinien im Volumen eines Glaselements,
Fig.2 schematisch in perspektivischer Ansicht eine Heizvorrichtung zur Erwärmung des Glaselements im Bereich des Hauptteils,
Fig.3 ein Diagramm schematischer Graphen der Temperatur als Funktion des Ortes bezüglich der lateralen Dimensionen eines flächigen Glaselements,
Fig.4 schematisch in Aufsicht durch Aufwärmen/Abkühlen erzeugte Zugspannungen in einem flächigen Glaselement,
Fig.5 schematisch in perspektivischer Ansicht ein filamentiertes Glaselement, das im Bereich des Hauptteils aufgewärmt wurde, so dass das Teilstück entnommen werden kann,
Fig.6 schematisch in Aufsicht verschiedene Formen einer Trennlinie und des entsprechenden Hauptteils und Teilstücks,
Fig.7 schematisch in perspektivischer Ansicht eine alternative Laserbearbeitungsvorrichtung zur Erzeugung schräg verlaufender filamentförmiger Schädigungen.
Fig.8 schematisch in Seitenansicht Glaselemente nach mehrmaliger Laserbearbeitung.
Fig.9 schematisch in perspektivischer Ansicht Glaselemente nach mehrmaliger Laserbearbeitung entlang einer Trennlinie sowie zusätzlicher Versatzlinien.
Fig.10 schematisch in perspektivischer Ansicht Sätze aus jeweils zwei flächigen Glaselementen.
Fig.11 schematisch in perspektivischer Ansicht flächige Glaselemente mit Versatz/Versätzen in der Kantenfläche.

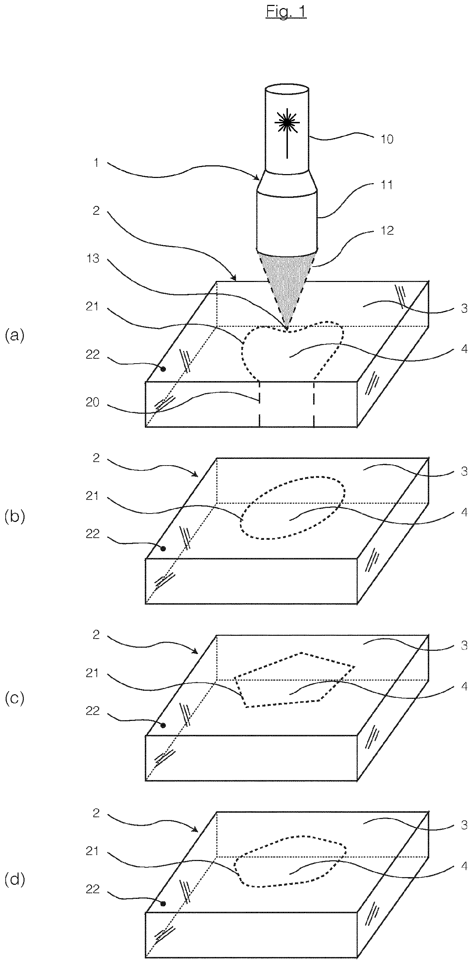

Die Fig.1 zeigt schematisch eine Laserbearbeitungsvorrichtung 1, mit welcher ein Glaselement 2 durch Einbringen von filamentförmigen Schädigungen 20 entlang einer definierten Trennlinie 21 mikroperforiert und damit für eine nachfolgende Abtrennung vorbereitet werden kann.

Die Laserbearbeitungsvorrichtung 1 umfasst einen Ultrakurzpulslaser 10, dessen Laserpulse 12 auf das Glaselement 2 gerichtet werden. Die Laserpulse 12 werden dazu mittels einer Fokussiereinrichtung 11 auf das Glaselement 2 fokussiert. Die Wellenlänge des Ultrakurzpulslasers 10 wird so gewählt, dass die Laserpulse 12 in das Glaselement 2 eindringen können.

Die Laserpulse 12 erzeugen dabei im Volumen des Glaselements 2 ein Plasma, welches die filamentförmigen Schädigungen 20 hervorruft. Die Auftreffpunkte 13 der Laserpulse 12 auf dem Glaselement 2 werden sukzessive über die Oberfläche 22 entlang der definierten Trennlinie 21 bewegt.

Die Trennlinie 21 ist dabei so definiert, dass sie das Glaselement 2 vollständig einteilt in ein abzutrennendes Teilstück 4 und einen verbleibenden Hauptteil 3.

In Fig.1 sind verschiedene beispielhafte Trennlinien 21 gezeigt. Fig.1a zeigt eine gebogene nicht-geradlinige Trennlinie, die nicht in sich geschlossen ist. Fig.1b-d zeigen in sich geschlossene Trennlinien 21 verschiedener Formen. Fig.1b zeigt eine Trennlinie 21 ovaler Form, Fig.1c zeigt eine Trennlinie 21 in Form eines regelmäßigen Fünfecks und Fig.1d zeigt eine Trennlinie 21 in Form eines regelmäßigen Fünfecks mit abgerundeten Ecken.

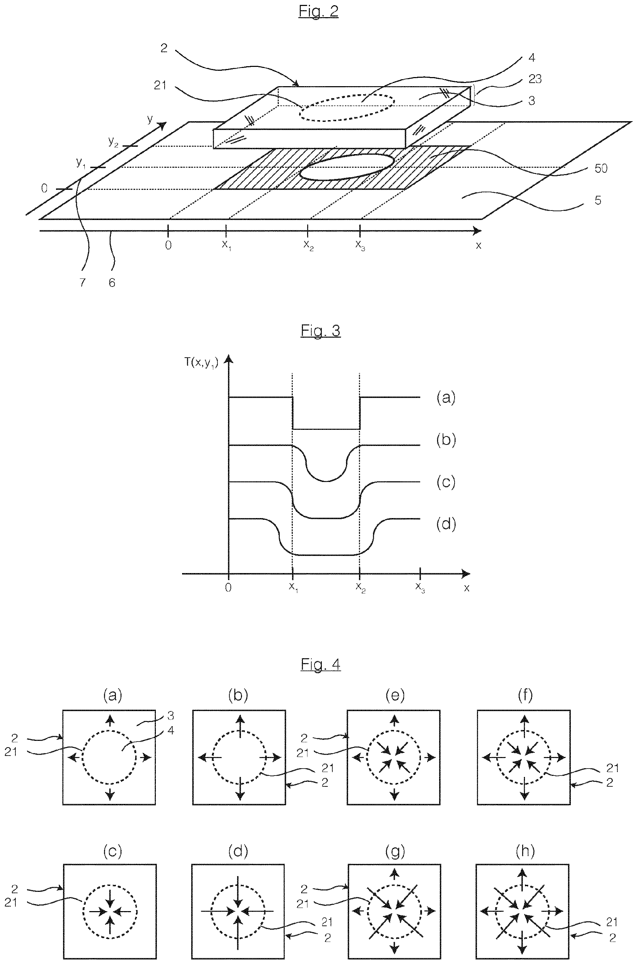

Fig.2 zeigt schematisch eine beispielhafte Heizvorrichtung 5 zur Erwärmung des Glaselements 2 im Bereich des Hauptteils 3. Zur besseren Darstellung hat das Glaselement 2 in der Fig.2 einen deutlichen Abstand von der Heizvorrichtung 5. In der Realität kann das Glaselement 2 demgegenüber mit der Heizvorrichtung 5 in Kontakt sein. Das flächige Glaselement 2 kann demnach mit der Oberfläche seiner Unterseite auf der Heizvorrichtung 5 aufliegen.

In Fig. 2 hat das flächige Glaselement 2 seine längsten Abmessungen entlang der gezeigten x- und y-Dimension. Die beiden Dimensionen, die entlang der längsten Abmessungen des Glaselements 2 verlaufen, sollen auch als erste laterale Dimensionen 6 und zweite laterale Dimension 7 bezeichnet werden. Entlang der Dimension, die orthogonal zu den lateralen Dimensionen 6 und 7 verläuft, hat das Glas eine Dicke 23.

Die in Fig.2 beispielhaft gezeigte Heizvorrichtung 5 ist flächig ausgebildet, kann demnach auch als Heizplatte bezeichnet werden. Die Oberfläche dieser Heizplatte ist hier parallel zu den beiden lateralen Dimensionen 6 und 7 des Glaselements 2, d.h. zu der in Fig.2 dargestellten x- und y-Dimension.

Die Heizplatte erwärmt das Glaselement 2 im Bereich des Hauptteils 3. Allgemein, ohne Beschränkung auf die beispielhafte Heizvorrichtung, kann die Heizplatte über ein an die Form des Hauptteils 3 angepasstes Heizfeld 50 verfügen. Im gezeigten Fall erstreckt sich das Heizfeld entlang der ersten lateralen Dimension 6 von dem Wert x=0 bis zu dem Wert x=x₃ und entlang der zweiten lateralen Dimension 7 von dem Wert y=0 bis zu dem Wert y=y₂, wobei es im Zentrum über eine an das Teilstück 4 angepasste Aussparung verfügt, welche zum Beispiel für den Wert y=y₁ von x=x₁ bis x=x₂ reicht. Entsprechend wird das Glaselement 2 auf einer Oberfläche, die sich in der Ebene der beiden lateralen Dimensionen (x- und y-Dimension) erstreckt, in Abhängigkeit von der Position auf dieser Oberfläche (x- und y-Wert) unterschiedlichen Temperaturen ausgesetzt.

Fig.3 zeigt verschiedene schematische Temperaturverläufe im Glaselement 2, die sich zur erfindungsgemäßen Trennung des Teilstücks 4 von dem Hauptteil 3 eignen. Die Temperaturverläufe sind gezeigt als Funktionen des Ortes x einer ersten lateralen Dimensionen 6 bei festgelegtem Wert y=y₁ der zweiten lateralen Dimension 7. Der festgelegte Wert y=y₁ der zweiten lateralen Dimension ist dabei so gewählt, dass für den Verlauf des Wertes x entlang der ersten lateralen Dimension sowohl Positionen im Bereich des Hauptteils 3 als auch Positionen im Bereich des Teilstücks 4 auftreten. Fig.3a zeigt einen idealisierten Temperaturverlauf für den Fall, dass der Hauptteil 3 eine konstante Temperatur hat, die höher ist, als die Temperatur des Teilstücks 4. Fig.3c zeigt einen ähnlichen Temperaturverlauf für den Fall, dass ein Temperaturgradient vorliegt, der über die durch die Trennlinie 21 beschriebene Sollbruchstelle verläuft. Fig.3b und Fig.3d zeigen ebenfalls Temperaturverläufe für den Fall vorliegender Temperaturgradienten, wobei hier der Temperaturgradient vollständig im Teilstück 4 bzw. im Hauptteil 3 verläuft. Allen in Fig.3a-d dargestellten Temperaturverläufen ist gemein, dass die Durchschnittstemperatur im Hauptteil 3 höher ist, als die Durchschnittstemperatur im Teilstück 4. Es ist dabei nicht erheblich, ob das Glaselement 2 im Bereich des Hauptteils 3 erwärmt oder im Bereich des Teilstücks 4 abgekühlt wurde oder beides gleichzeitig oder zeitversetzt erfolgt ist. Maßgeblich für das erfindungsgemäße Verfahren ist nur, dass sich infolge des erzeugten Temperaturverlaufs das Glaselement 2 im Bereich des Hauptteils 3 ausdehnt und/oder im Bereich des Teilstücks 4 zusammenzieht.

Fig.4 zeigt in Aufsicht auf das Glaselement 2 in dem Glaselement 2 durch erfindungsgemäßes Aufwärmen und/oder Abkühlen erzeugte Zugspannungen, das heißt, für den Fall, dass kein Cleaving-Schritt durchgeführt wurde. Die Zugspannungen sind schematisch durch Pfeile dargestellt. In dem Glaselement 2 seien zuvor bereits entlang der Trennlinie 21 aufgereihte filamentförmige Schädigungen eingebracht worden. Fig.4a zeigt Zugspannungen infolge eines Aufwärmens des Glaselements 2 im Bereich des Hauptteils 3 entsprechend eines in Fig.3d dargestellten Temperaturverlaufs. Fig.4b zeigt Zugspannungen infolge eines Aufwärmens im Bereich des Hauptteils 3 entsprechend eines in Fig.3c dargestellten Temperaturverlaufs. Fig.4c zeigt Zugspannungen infolge eines Abkühlens im Bereich des Teilstücks 4 entsprechend eines in Fig.3b dargestellten Temperaturverlaufs. Fig.4d zeigt Zugspannungen infolge eines Abkühlens im Bereich des Teilstücks 4 entsprechend eines in Fig.3c dargestellten Temperaturverlaufs. Fig.4e zeigt Zugspannungen infolge eines Aufwärmens im Bereich des Hauptteils 3 entsprechend eines in Fig.3d dargestellten Temperaturverlaufs bei gleichzeitigem oder zeitversetztem Abkühlen im Bereich des Teilstücks 4 entsprechend eines in Fig.3b dargestellten Temperaturverlaufs. Fig.4f zeigt Zugspannungen infolge eines Aufwärmens im Bereich des Hauptteils 3 entsprechend eines in Fig.3c dargestellten Temperaturverlaufs bei gleichzeitigem oder zeitversetztem Abkühlen im Bereich des Teilstücks 4 entsprechend eines in Fig.3b dargestellten Temperaturverlaufs. Fig.4g zeigt Zugspannungen infolge eines Aufwärmens im Bereich des Hauptteils 3 entsprechend eines in Fig.3d dargestellten Temperaturverlaufs bei gleichzeitigem oder zeitversetztem Abkühlen im Bereich des Teilstücks 4 entsprechend eines in Fig.3c dargestellten Temperaturverlaufs. Fig.4h zeigt Zugspannungen infolge eines Aufwärmens im Bereich des Hauptteils 3 entsprechend eines in Fig.3c dargestellten Temperaturverlaufs bei gleichzeitigem oder zeitversetztem Abkühlen im Bereich des Teilstücks 4 entsprechend eines in Fig.3c dargestellten Temperaturverlaufs.

Alle in Fig.4a-h dargestellten Varianten, um im Glaselement 2 durch Aufwärmen und/oder Abkühlen Zugspannungen zu erzeugen, können bewirken, dass sich das Teilstück 4 entlang der Trennlinie 21 an den nebeneinander liegenden filamentförmigen Schädigungen von dem Hauptteil 3 abtrennt.

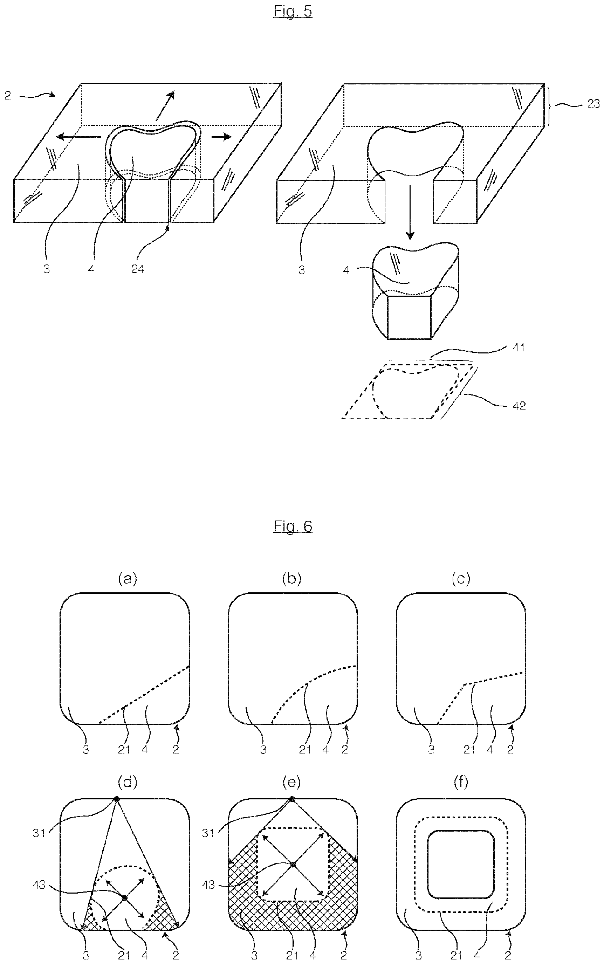

Fig.5 zeigt schematisch in perspektivischer Ansicht ein Glaselement 2, das im Bereich des Hauptteils 3 erwärmt und zum Ausdehnen gebracht wurde. Das Glaselement 2 hat sich von dem Teilstück 4 entlang der Trennlinie an den nebeneinander liegenden filamentförmigen Schädigungen von dem Hauptteil 3 abgelöst. Das Teilstück 4 kann dadurch aus dem Hauptteil 3 entnommen werden.

Solange der Hauptteil 3 noch erwärmt ist, ist die Entnahme des Teilstücks 4 problemlos, d.h. insbesondere ohne Verkanten mit dem Hauptteil 3, Zerstörung oder dauerhafte Deformation des Teilstücks 4, möglich. Dies liegt darin begründet, dass durch das relative Ausdehnen des Hauptteils 3 gegenüber dem Teilstück 4 nicht nur ein Abtrennen entlang der Trennlinie erfolgt ist, sondern auch ein dem Verlauf der Trennlinie entsprechender Spalt 24 zwischen dem Hauptteil 3 und dem Teilstück 4 entstanden ist. Dieser Spalt stellt einen gewissen Spielraum zur Verfügung, wodurch des ermöglicht wird, das Teilstücks 4 ohne Verkanten von dem Hauptteil 3 zu entnehmen.

Während es bei Trennverfahren, die mit dem Aufbringen von Biegemomenten oder dem lokalen Erwärmen durch Laserstrahlung, beispielsweise durch CO₂-Laser, arbeiten, zu immer größeren Schwierigkeiten kommt, je dicker das Glaselement 2 ist, ist die Entnahme des Teilstücks 4 in dem erfindungsgemäßen Verfahren insbesondere auch problemlos möglich für Glaselemente 2 mit einer Dicke 23 von mindestens 2 Millimetern, vorzugsweise von mindestens 3 Millimetern, besonders bevorzugt von mindestens 4 Millimetern, noch bevorzugter von mindestens 5 Millimetern.

Die Breite des durch das Aufwärmen im Bereich des Hauptteils 3 und/oder Abkühlen im Bereich des Teilstücks 4 entstandenen Spalts hängt unter anderem von der Differenz der mittleren Temperaturen ab, die zwischen dem Hauptteil 3 und dem Teilstück 4 erzeugt wurde. Die Spaltbreite hängt aber auch von der Größe der Fläche des Teilstücks 4 entlang der beiden lateralen Dimensionen 6 und 7 ab. Es ist für das erfindungsgemäße Verfahren vorteilhaft, wenn das Teilstück 4 entlang dieser beiden Dimensionen gewisse Mindestabmessungen aufweist, insbesondere wenn die kleinste Abmessung des Teilstücks 4 in einer ersten lateralen Dimension 6 als auch die kleinste Abmessung des Teilstücks 4 in einer zweiten lateralen Dimension 7 jeweils eine Mindestlänge aufweisen. In einer Weiterbildung der Erfindung ist diese Mindestlänge 5 Millimeter, vorzugsweise 10 Millimeter, besonders bevorzugt 20 Millimeter.

Alternativ ist aber auch möglich, dass das kleinste Rechteck, welches das Teilstück 4 in der durch die lateralen Dimensionen 6 und 7 aufgespannten Ebene umschließt, Seitenlängen 41 und 42 aufweist, die jeweils eine gewisse Mindestlänge haben. Dann weist sowohl die maximale Abmessung des Teilstücks 4 in einer ersten lateralen Dimension 6 als auch die maximale Abmessung des Teilstücks 4 in einer zweiten lateralen Dimension 7 jeweils eine Mindestlänge auf.

Fig.6 zeigt in Aufsicht auf das Glaselement 2 verschiedene Formen einer Trennlinie 21 und entsprechender Hauptteile 3 und Teilstücke 4. Das beschädigungsfreie Abtrennen des Teilstücks 4 von dem Hauptteil 3 - also das Abtrennen in einer Weise, dass sowohl der Hauptteil 3 als auch das Teilstück 4 bis auf die Mikroperforation an der Trennungskante keinen weiteren Schaden nimmt - ist auf einfache Weise möglich, wenn die Trennlinie 21, wie in Fig.6a gezeigt, geradlinig ist. In einem solchen Fall ist das beschädigungsfreie Abtrennen mit dem erfindungsgemäßen Verfahren möglich, es ist jedoch auch mit herkömmlichen Trennungsverfahren wie beispielsweise dem Aufbringen eines hinreichenden Biegemoments durchführbar. Ähnliches gilt für leicht gebogene oder leicht gewinkelt verlaufende Trennlinien 21, wie sie in Fig.6b bzw. Fig.6c gezeigt sind.

Bei gängigen Trennungsverfahren kommt es insbesondere dann zu Schwierigkeiten, wenn die Trennlinie 21 stark gebogen ist oder stark gewinkelt verläuft, das heißt, wenn das Teilstück 4 in der Ebene des Glaselements 2 als überwiegend innenliegend oder vollständig innenliegend bezeichnet werden kann, wie es in Fig.6d bzw. Fig.6e beispielhaft illustriert ist. Das erfindungsgemäße Verfahren eignet sich demgegenüber für solche Fälle sehr gut.

Fig.6d zeigt einen Fall, in dem das Teilstück 4 überwiegend im Inneren des Glaselements 2 liegt. Ein Kriterium, das für diesen Fall herangezogen werden kann, ist, dass die zweidimensionale Form des Hauptteils 3 in der Ebene des Glaselements 2 nicht sternförmig im mathematisch-topologischen Sinne ist. Das bedeutet, dass es innerhalb des zweidimensionalen Gebiets, das dem Hauptteil 3 entspricht keinen einzigen Punkt 31 gibt, der die Eigenschaft eines Sternpunkts hat. Dem gezeigten Punkt 31 mangelt es an der Eigenschaft eines Sternpunkts, da es von dem Punkt 31 ausgehend nicht möglich ist, geradlinige Verbindungsstrecken zu allen anderen Punkten innerhalb des zweidimensionalen Gebietes, das dem Hauptteil 3 entspricht zu ziehen, welche vollständig innerhalb dieses zweidimensionalen Gebietes liegen. Daher sind ausgehend von dem Punkt 31 die schraffiert gezeichneten Bereiche in dem Gebiet des Hauptteils 3 nicht in der dargelegten Weise erreichbar. Das Gebiet des Hauptteils 3 ist demzufolge nicht sternförmig. Dasselbe gilt für das Gebiet des in Fig.6e gezeigten Hauptteils 3, welches weder sternförmig noch einfach zusammenhängend ist. Das Teilstück 4 ist hier sogar vollständig innenliegend, das heißt, es wird in der Ebene des Glaselements 2 vollständig umschlossen. Ein solches innenliegendes Teilstück 4 wird mitunter auch als Innenkontur oder Innengeometrie bezeichnet.

Es ist für das erfindungsgemäße Verfahren in der Regel vorteilhaft, wenn die zweidimensionale Form des Teilstücks 4 in der Ebene des Glaselements 2 sternförmig ist, das heißt, wenn es mindestens einen Sternpunkt 43 im zweidimensionalen Gebiet, das dem Teilstück 4 entspricht, gibt. Dies ist in den in Fig.6d und Fig.6e gezeigten Situationen der Fall. In den in Fig.6d und Fig.6e gezeigten Beispielen ist sogar jeder Punkt des Gebiets des Teilstücks 4 ein Sternpunkt. Mit anderen Worten, die Gebiete der Teilstücke 4 sind in diesen Beispielen sogar konvexe Gebiete. Es ist für das Abtrennen vorteilhaft, wenn Teilstücke 4 in der Ebene des flächigen Glaselements 2 konvexe Gebiete darstellen. Daher ist es allgemein, ohne Beschränkung auf die gezeigten Beispiele, in einer Weiterbildung der Erfindung vorgesehen, dass Teilstücke abgelöst werden, die in der Ebene des flächigen Glaselements eine zweidimensionale Form eines konvexen Gebiets aufweisen.

Es ist allerdings nicht zwingend nötig für das Funktionieren des erfindungsgemäßen Verfahrens, dass die Form des Teilstücks in der Fläche des Glases sternförmig oder sogar konvex ist. Dies liegt, daran, dass die Abtrennung entlang der Sollbruchstelle, die gemäß der Trennlinie 21 verläuft dazu neigt, voranzuschreiten, wenn sie an gewissen Bereichen erst einmal begonnen hat. Zudem kann ein ungleichmäßiges Abkühlen und/oder Erwärmen des Hauptteils 3 und/oder des Teilstücks 4 ebenfalls zum Abtrennen nicht-sternförmiger Teilstücke 4 beitragen.

Ein weiterer beispielhafter Fall, in dem weder der Hauptteil noch das Teilstück 4 in der Fläche des Glases sternförmig oder konvex ist, ist in Fig.6f gezeigt. Hier ist das zweidimensionale Gebiet das dem Glaselement 2 entspricht weder sternförmig noch konvex noch einfach zusammenhängend. Ein solches Glaselement 2, das ein Loch aufweist, kann zum Beispiel aus einem erfindungsgemäßen Abtrennen eines innenliegenden Teilstücks hervorgehen, wie es in Fig.6e gezeigt ist. Die Trennlinie 21 ist in diesem Fall in sich geschlossen. Mathematisch gesprochen handelt es sich bei dem durch die Trennlinie 21 definierten Teilstück 4 um kein innenliegendes Teilstück 4 mehr. Es ist jedoch in der Praxis - je nach Größe des Lochs - nicht unüblich dennoch von einer Innengeometrie zu sprechen. Das nicht sternförmige und nicht einfach zusammenhängende Teilstück 4 kann mit dem erfindungsgemäßen Verfahren beschädigungsfrei und ohne Verkanten von dem nicht sternförmigen und nicht einfach zusammenhängenden Hauptteil 3 abgetrennt werden.

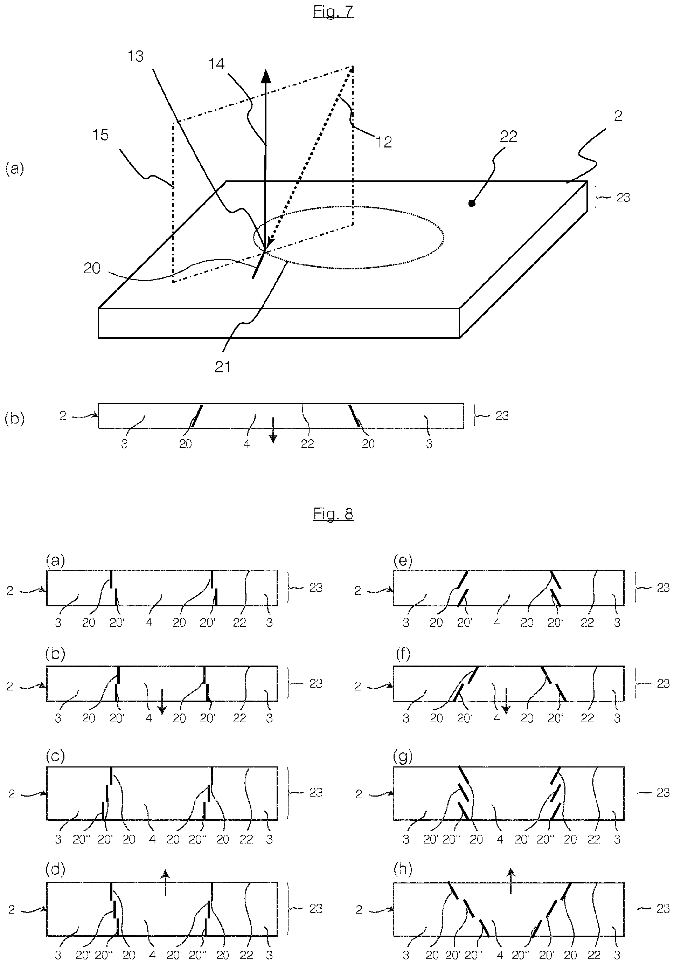

Wie anhand der Fig.7a ersichtlich ist, können in einer Weiterbildung der Erfindung die Laserpulse 12 auch schräg auf die Oberfläche 22 des Glaselements 2 gerichtet werden, so dass zwischen der Oberflächennormalen 14 und der Richtung der Laserpulse 12 ein Winkel besteht. Damit verläuft auch die Längsrichtung der filamentförmigen Schädigungen 20 schräg zur Oberfläche 22. Zu beachten ist darüber hinaus der Einfluss der Brechung des Laserlichts an der Oberfläche 22 des Glaselements 2.

Der Winkel zwischen der Lichteinfallsrichtung und der Oberflächennormalen 14 kann, um das Abtrennen des Teilstücks zu erleichtern, im Bereich wenige Grade bis deutlich über 10° liegen. Vorzugsweise wird dabei zwischen der Lichteinfallsrichtung der Laserpulse 12 und der Oberflächennormalen 14 der Oberfläche 22 des Glaselements 2 ein Winkel im Bereich von 3° bis 30°, besonders bevorzugt 3° bis 15°, noch bevorzugter mindestens 5° eingestellt.

Wie anhand von Fig.7a zu erkennen ist, werden die Laserpulse 12 weiterhin schräg so auf die Oberfläche 22 gerichtet, dass die Lichteinfallsebene 15 quer, bevorzugt senkrecht zur Trennlinie 21 liegt. Dementsprechend liegt auch die Fortbewegungsrichtung, entlang welcher der Auftreffpunkt 13 über die Oberfläche 22 bewegt wird, quer, vorzugsweise senkrecht zur Lichteinfallsebene 15. Die Lichteinfallsebene 15 wird durch die Lichteinfallsrichtung und die Oberflächennormale 14 aufgespannt. Ist die Trennlinie 21, wie auch im gezeigten Beispiel gekrümmt, beispielsweise kreisförmig, so ist die Orientierung der Trennlinie 21 quer zur Lichteinfallsebene 15 dahingehend zu verstehen, dass die Tangente an die Trennlinie 21 quer, vorzugsweise senkrecht zur Lichteinfallsebene 15 steht.

Fig.7b zeigt eine der Fig.7a entsprechende Schnittansicht des Glaselements 2. Durch den Winkel, der zwischen der Längsrichtung der filamentförmigen Schädigungen 20 und der Normalen auf der Oberfläche 22 besteht, ergibt sich eine durch den Pfeil gekennzeichnete Vorzugsrichtung, entlang derer das Teilstück 4 von dem Hauptteil 3 separiert werden kann.

Fig.8 illustriert Glaselemente in einer zu Fig.7b analogen Schnittansicht nach mehrfacher Laserbearbeitung in unterschiedlichen Fokustiefen. Das bedeutet, nach einem Bearbeitungsschritt in welchem Schädigungen 20 durch Laserpulse 12 eines Ultrakurzpulslasers im Volumen des Glaselements 2 erzeugt werden indem die Auftreffpunkte 13 der Laserpulse 12 auf dem Glaselement 2 über dessen Oberfläche 22 entlang der Trennlinie 21 bewegt werden gibt es weitere Bearbeitungsschritte in welchen in analoger Weise, allerdings mit anderen Fokustiefen der Laserpulse 12, Schädigungen 20', 20", etc. in anderen Tiefen im Volumen des Glaselements 2 erzeugt werden.

Eine solche mehrfache Laserbearbeitung bietet sich insbesondere bei dickeren Glaselementen 2 an, bei denen es oft nicht mehr möglich oder zumindest ungünstig ist, die Mikroperforation über die gesamte Dicke 23 in einem einzelnen Bearbeitungsschritt, beziehungsweise mit einmaligem Entlangbewegen des Auftreffpunkts 13 des Laserstrahls 12 entlang der Trennlinie 21 durchzuführen.

Ein Problem, dass sich bei mehrmaligem Überfahren mit dem Laserstrahl in unterschiedlichen Fokustiefen ergeben kann ist, dass die Schädigungen in unterschiedlichen Tiefen im Volumen des Glaselements 2 nicht ideal fluchten.

Fig.8a veranschaulicht beispielhaft und schematisch ein Glaselement 2 nach zweimaliger Laserbearbeitung über dessen Oberfläche 22. In einem ersten Bearbeitungsschritt wurden die Schädigungen 20 erzeugt, während in einem zweiten Schritt die Schädigungen 20' in einer darunter liegenden Tiefe erzeugt wurden. Die Schädigungen 20 und 20' haben einen gewissen Versatz zueinander, welcher typischerweise infolge der finiten Positioniergenauigkeit statistische Schwankungen aufweist. Dieser Versatz erschwert es, das Teilstück 4 von dem Hauptteil 3 mit dem erfindungsgemäßen Verfahren abzutrennen. Durch den Versatz entsteht eine gegenüber der infolge der Filamentierung an sich bedingten Rauheit R erhöhte Rauheit R' der Schnittkante.

In einer Weiterbildung der Erfindung ist es vorgesehen, den Versatz zwischen Schädigungen 20 und 20' so herbeizuführen, dass für eine Abtrennung des Teilstücks 4 von dem Hauptteil 3 nur die durch die Filamentierung an sich bedingte Rauheit R, nicht aber die den Versatz berücksichtigende Rauheit R' der Kantenfläche maßgeblich ist.

Wie in Fig.8b dargestellt, sind die Schädigungen 20', die sich tiefer bezüglich der Oberfläche 22 im Volumen des Glaselements 2 befinden, so erzeugt, dass das Teilstück 4 auf der der Oberfläche 22 gegenüberliegenden Seite etwas größer ist, als auf der Seite der Oberfläche 22. Dadurch ergibt sich eine durch den Pfeil gekennzeichnete Vorzugsrichtung, entlang derer das Teilstück 4 von dem Hauptteil 3 separiert werden kann. Entlang dieser Vorzugsrichtung ist die Rauheit R, welche nur durch das Filamentieren bedingt ist, für das Abtrennen maßgeblich, während entgegen der Vorzugsrichtung die Rauheit R', die sich auch aus dem Versatz zwischen den Schädigungen 20 und 20' ergibt, für das Abtrennen maßgeblich ist. Bei dem Teilstück 4 muss es sich nicht um ein vollständig innenliegendes Teilstück handeln, vielmehr kommen alle bereits benannten Formen in Betracht. Für den Fall, dass das Teilstück 4 ein kreisförmiges Innenstück ist, hat es infolge des Versatzes zwischen den Schädigungen 20 und 20' bildlich gesprochen eine Tortenform.

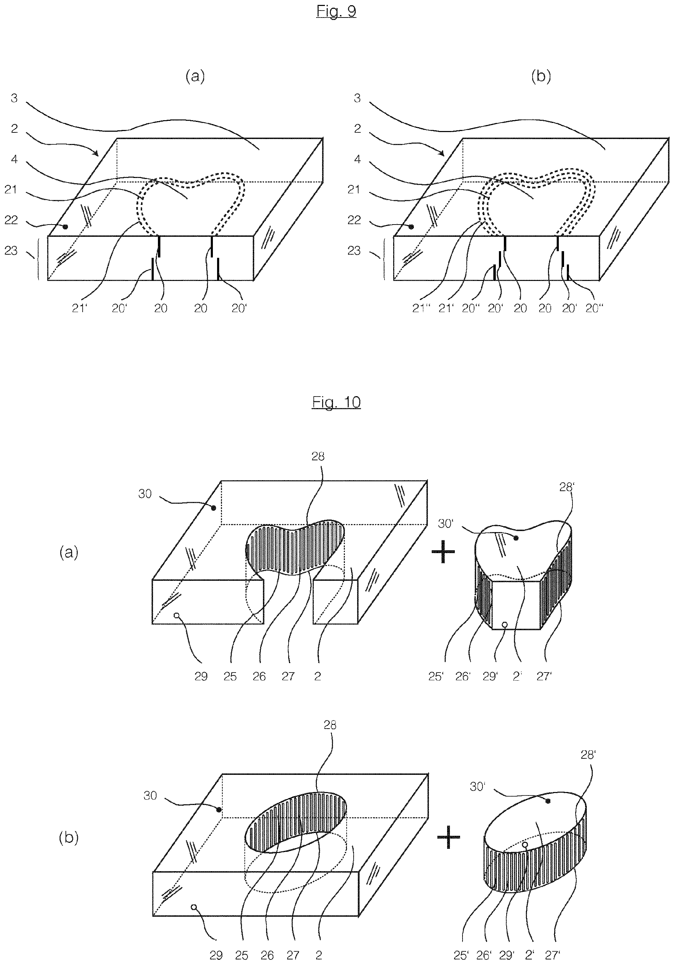

Während die Schädigungen 20 gemäß Fig.1 dadurch erzeugt werden, dass die Auftreffpunkte 13 der Laserpulse 12 auf dem Glaselement 2 über dessen Oberfläche 22 entlang der Trennlinie 21 bewegt werden, werden die Schädigungen 20' gemäß Fig.9a dadurch erzeugt, dass die Auftreffpunkte 13 der Laserpulse 12 auf dem Glaselement 2 über dessen Oberfläche 22 entlang einer von der Trennlinie 21 leicht beabstandeten Versatzlinie 21' bewegt werden. Die Versatzlinie verläuft vorteilhaft vollständig auf einer Seite der Trennlinie 21; es ist aber nicht notwendig, wenn auch vorteilhaft, dass der Abstand, den die Versatzlinie 21' von der Trennlinie 21 aufweist, entlang der Linien konstant ist.

Die beschriebene Weiterbildung der Erfindung beschränkt sich nicht nur auf zweimalige Laserbearbeitung. Es können auch drei oder noch mehr Überfahrten mit dem Laser durchgeführt werden. Fig.8c zeigt beispielhaft und schematisch den Schnitt durch ein Glaselement 2 nach dreimaliger Laserbearbeitung, die zu den Schädigungen 20, 20' und 20'' geführt haben. Fig.8d zeigt wiederum, wie die Versätze zwischen den Schädigungen 20 und 20' sowie zwischen den Schädigungen 20' und 20'' in dieser Weiterbildung der Erfindung so erzeugt werden können, dass sich eine durch den Pfeil gekennzeichnete Vorzugsrichtung zum Abtrennen des Teilstücks 4 von dem Hauptteil 3 ergibt.

Hierbei sind die Schädigungen 20' gemäß Fig.9b dadurch erzeugt, dass die Auftreffpunkte 13 der Laserpulse 12 auf dem Glaselement 2 über dessen Oberfläche 22 entlang einer von der Trennlinie 21 leicht beabstandeten ersten Versatzlinie 21' bewegt werden. Die Schädigungen 20'' sind ferner dadurch erzeugt, dass die Auftreffpunkte 13 der Laserpulse 12 auf dem Glaselement 2 über dessen Oberfläche 22 entlang einer von der Trennlinie 21 etwas weiter als die erste Versatzlinie 21' beabstandeten zweiten Versatzlinie 21'' bewegt werden. Die zweite Versatzlinie 21'' verläuft vorteilhaft vollständig auf einer Seite der ersten Versatzlinie 21'; es ist aber nicht notwendig, wenn auch vorteilhaft, dass der Abstand, den die zweite Versatzlinie 21'' von der ersten Versatzlinie 21' aufweist, entlang der Linien konstant ist.

Es können auch mehr als zwei Schritte der Laserbearbeitung durchgeführt werden. Dazu können weitere, wiederum etwas weiter von der Trennlinie 21 beabstandete Versatzlinien definiert werden, entlang derer die Auftreffpunkte 13 der Laserpulse 12 auf dem Glaselement 2 über dessen Oberfläche 22 bewegt werden.

Das gezielte Kontrollieren eins Versatzes oder mehrerer Versätze zwischen Schädigungen, die durch mehrfache Laserbearbeitung mit unterschiedlichen Fokustiefen erzeugt werden, kann kombiniert werden mit der in Fig.7 dargestellten Laserbearbeitung bei der die Laserpulse 12 schräg auf die Oberfläche 22 des Glaselements 2 gerichtet werden. In der Praxis kann der Winkel, der zwischen der Lichteinfallsrichtung und der Oberflächennormalen 14 besteht, in der Regel nicht exakt auf Null Grad eingestellt werden. Insofern besteht genaugenommen regelmäßig ein (noch so) kleiner Winkel, so dass auch die Längsrichtungen der Schädigungskanäle regelmäßig einen gewissen Winkel gegenüber der Oberflächennormalen 14 des Glaselements 2 aufweisen. Wie bei der Positionierung ist auch hier von einer statistischen Abweichung kleiner der Ausrichtgenauigkeit auszugehen.

Fig.8e zeigt schräge Schädigungen 20 und 20' durch zweimalige Laserbearbeitung eines Glaselements 2. Wiederum sind die Schädigungen 20 und 20' nicht genau auf einer Linie (bzw. genau in einer Fläche) sondern weisen einen gewissen Versatz zueinander auf. Dieser erschwert es wiederum, das Teilstück 4 von dem Hauptteil 3 mit dem erfindungsgemäßen Verfahren abzutrennen.

Wie Fig.8f zeigt, kann der Versatz allerdings vorteilhaft so eingestellt werden, dass sich die durch den Pfeil gekennzeichnete Vorzugsrichtung zum Abtrennen ergibt. Entlang der Vorzugsrichtung kann das Teilstück 4 von dem Hauptteil 3 abgetrennt werden, ohne dass die Kanten, die durch den Versatz entstehen, störend wirken.

Die beschriebene Weiterbildung der Erfindung beschränkt sich nicht nur auf zweimalige Laserbearbeitung mit schräg auf die Oberfläche 22 treffenden Laserpulsen 12. Es können auch drei oder noch mehr Laserbearbeitungsschritte in unterschiedlichen Fokustiefen durchgeführt werden. Fig.8g zeigt beispielhaft und schematisch den Schnitt durch ein Glaselement 2 nach dreimaliger Laserbearbeitung mit schräg auf die Oberfläche gerichteten Laserpulsen 12, die zu den Schädigungen 20, 20' und 20'' führen. Fig.8d zeigt wiederum, wie die Versätze zwischen den Schädigungen 20 und 20' sowie zwischen den Schädigungen 20' und 20'' in dieser Weiterbildung der Erfindung so angeordnet werden können, dass sich eine durch den Pfeil gekennzeichnete Vorzugsrichtung zum Abtrennen des Teilstücks 4 von dem Hauptteil 3 ergibt. Die Versätze müssen in der Praxis nicht gleich groß sein.

Fig.10 zeigt zwei Sätze (Fig.10a und Fig.10b) aus jeweils zwei flächigen Glaselementen, die mit dem erfindungsgemäßen Verfahren herstellbar sind. Während der in Fig.10b gezeigte Satz aus zwei flächigen Glaselementen so ausgebildet ist, dass die zweidimensionale Form, die das eine der flächigen Glaselemente 2 in seiner Ebene aufweist, die zweidimensionalen Form, die das andere der flächigen Glaselemente 2' in seiner Ebene aufweist, vollständig umschließt, ist dies für den in Fig.10a gezeigten Satz aus zwei flächigen Glaselementen nicht der Fall. Für den in Fig.10b gezeigten Satz bedeutet dies, dass das Glaselement 2' ein zu dem Glaselement 2 passendes Innenstück ist. Für den in Fig.10a gezeigten Satz bedeutet dies, dass das Glaselement 2' ein zu dem Glaselement 2 passendes Teilstück ist, das hier als vorwiegend innenliegend bezeichnet werden kann.

Für beide gezeigten Sätze (Fig.10a und Fig.10b) gilt, dass das eine flächige Glaselement 2 zumindest theoretisch passgenau mit dem anderen flächigen Glaselement 2' zusammengefügt werden könnte.

Jedes flächige Glaselement 2 (oder 2') eines Satzes verfügt über eine Kantenfläche 25 (oder 25') in welcher nebeneinander verlaufende filamentförmige Schädigungen 26 (oder 26') vorhanden sind, die Vertiefungen in dieser Kantenfläche 25 (oder 25') bilden. Diese filamentförmigen Schädigungen können aus einer mikroperforierenden Laserbearbeitung entsprechend dem erfindungsgemäßen Verfahren hervorgehen.

Die Längsrichtung der filamentförmigen Schädigungen 26 (oder 26') in einer Kantenfläche 25 (oder 25') eines flächigen Glaselements eines Satzes mit zwei flächigen Glaselementen verläuft in Richtung von einer zur anderen Kante, welche den Übergang zwischen der Kantenfläche 25 (oder 25') und den Seitenflächen 29 (oder 29') und 30 (oder 30') des Glaselement bilden. Wenn ein Glaselement 2 (oder 2') eines Satzes zweier Glaselemente mit dem erfindungsgemäßen Verfahren herstellt wird, entspricht diese Längsrichtung der filamentförmigen Schädigungen 26 (oder 26') der Lichtausbreitungsrichtung der Laserpulse.

Würde man die beiden flächigen Glaselemente 2 und 2' eines Satzes passgenau zusammenfügen, würden sich die Glaselemente 2 und 2' an ihren Kantenflächen 25 und 25' berühren oder einander sehr nahe kommen. Es würden sich auch die Kanten 27 und 27' berühren oder sehr nahe kommen und außerdem die Kanten 28 und 28' berühren oder sehr nahe kommen. Die zweidimensionalen Flächen in den Ebenen der flächigen Glaselemente 2 und 2' würden beim Zusammenfügen der beiden Glaselemente 2 und 2' wie zwei Puzzleteile zusammenpassen.

Vorzugsweise stammen die beiden flächigen Glaselemente eines Satzes aus demselben Abtrennprozess. Das heißt, durch Anwendung des erfindungsgemäßen Verfahrens wurde ein ursprüngliches flächiges Glaselement zerteilt in einen Hauptteil und ein Teilstück, welche zusammengenommen einen erfindungsgemäßen Satz flächiger Glaselemente bilden. Wenn die beiden flächigen Glaselemente eines Satzes aus demselben Prozess stammen, ist eine ganz besonders hohe Passgenauigkeit gewährleistet, welche nochmals höher ist, als wenn aus mehreren äquivalenten Abtrennprozessen eine Teilstückreihe von untereinander äquivalenten Teilstücken und eine Hauptteilreihe von untereinander äquivalenten Hauptteilen erzeugt werden und aus einem beliebigen Teilstück aus der Teilstückreihe und einem beliebigen Hauptteil aus der Hauptteilreihe ein erfindungsgemäßer Satz flächiger Glaselemente hervorgeht.

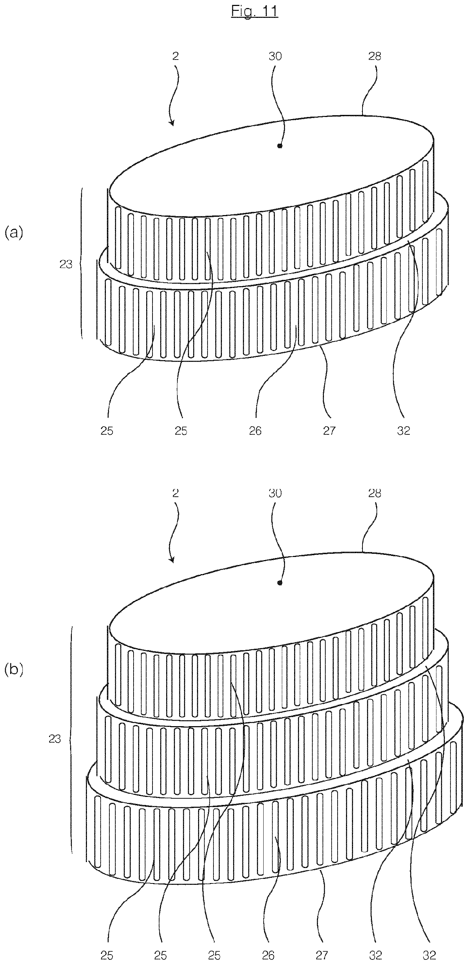

In einer Weiterbildung der Erfindung ist vorgesehen, dass jedes flächige Glaselement 2 (oder 2') eines Satzes mit zwei flächigen Glaselementen über eine Kantenfläche 25 (oder 25') verfügt, in welcher zumindest ein Versatz 32 (oder 32'), das heißt eine Stufe, vorhanden ist, welche quer, vorzugsweise im Wesentlichen senkrecht, zu der Längsrichtung der nebeneinander verlaufende filamentförmige Schädigungen 26 (oder 26') verläuft. Eine Illustration solcher flächigen Glaselemente 2 zeigt Fig.11.

Der zumindest eine Versatz 32 (oder 32') kann zu einer Rauheit R' der Kantenfläche 25 (oder 25') führen, die gegenüber der durch die filamentförmigen Schädigungen 26 (oder 26') bedingten Rauheit R erhöht ist.

Der zumindest eine Versatz stellt eine Stufe dar, die mit dem bloßen Auge nicht wahrnehmbar ist, so dass weiterhin von einer einzelnen Kantenfläche 25 (oder 25') gesprochen werden kann. Vorzugsweise stellt der zumindest eine Versatz eine Stufe von mindestens 5 Mikrometern und höchstens 50 Mikrometern dar.

Fig.11a zeigt ein erfindungsgemäßes flächiges Glaselement 2, welches sich dadurch auszeichnet, dass in einer Kantenfläche 25 nebeneinander verlaufende filamentförmige Schädigungen 26 vorhanden sind, die Vertiefungen in der Kantenfläche 25 bilden, wobei die Längsrichtung der filamentförmigen Schädigungen 26 in Richtung von einer Kante 27 zur anderen Kante 28 verläuft, welche den Übergang zwischen der Kantenfläche 25 und den Seitenflächen 30 des flächigen Glaselements 2 bilden, und wobei die Kantenfläche 25 einen entlang der gesamten Kantenfläche 25 verlaufenden Versatz 32 aufweist, welcher im Wesentlichen senkrecht zu der Längsrichtung der filamentförmigen Schädigungen 26 verläuft. Der Versatz verläuft vorzugsweise mit einer Abweichung von 20 Prozent in der Mitte der Kantenfläche, das heißt mit einer Abweichung von 20 Prozent mittig zwischen den Kanten 27 und 28.

Fig.11b zeigt ein weiteres erfindungsgemäßes flächiges Glaselement 2, welches sich dadurch auszeichnet, dass die Kantenfläche 25 zwei entlang der gesamten Kantenfläche 25 verlaufende Versätze 32 aufweist, welche im Wesentlichen senkrecht zu der Längsrichtung der filamentförmigen Schädigungen 26 verläuft. Die beiden Versätz verlaufen vorzugsweise mit einer Abweichung von 20 Prozent mit einem Abstand von einem Drittel bzw. zwei Dritteln der Breite 23 der Kantenfläche 25 von der Oberfläche 30 des Glaselements 2.

### Bezugszeichenliste

- 1: Laserbearbeitungsvorrichtung
- 10: Ultrakurzpulslaser
- 11: Fokussiereinrichtung
- 12: Laserpuls
- 13: Auftreffpunkte der Laserpulse auf dem Glaselement
- 14: Oberflächennormale des Glaselements
- 15: Lichteinfallsebene der Laserpulse
- 2: flächiges Glaselement
- 2': flächiges Glaselement
- 20, 20', 20'': filamentförmige Schädigungen
- 21, 21', 21'': Trennlinie
- 22: Oberfläche des Glaselements
- 23: Dicke des Glaselements
- 24: Spalt zwischen dem Teilstück und dem Hauptteil
- 25: Kantenfläche in der nebeneinander verlaufende filamentförmige Schädigungen vorhanden sind
- 25': Kantenfläche in der nebeneinander verlaufende filamentförmige Schädigungen vorhanden sind
- 26: filamentförmige Schädigungen an einer Kantenfläche
- 26': filamentförmige Schädigungen an einer Kantenfläche
- 27, 28: Kanten eines flächigen Glaselements, welche den Übergang zwischen den Seitenflächen und einer diese Seitenflächen verbindenden Kantenfläche bilden
- 27', 28': Kanten eines flächigen Glaselements, welche den Übergang zwischen den Seitenflächen und einer diese Seitenflächen verbindenden Kantenfläche bilden
- 29, 30: Seitenflächen eines flächigen Glaselements
- 29', 30': Seitenflächen eines flächigen Glaselements
- 32: Versatz in einer Kantenfläche
- 3: Hauptteil
- 31: Punkt im dem Hauptteil entsprechenden zweidimensionalen Gebiet
- 4: abzutrennendes Teilstück
- 41: maximale Ausdehnung des Teilstücks entlang der ersten lateralen Dimension
- 42: maximale Ausdehnung des Teilstücks entlang der zweiten lateralen Dimension
- 43: Punkt im dem Teilstück entsprechenden zweidimensionalen Gebiet
- 5: Heizvorrichtung
- 50: Heizfeld
- 6: erste laterale Dimension des Glaselements
- 7: zweite laterale Dimension des Glaselements

## Patentansprüche

1. Verfahren zum Abtrennen eines Teilstücks (4) von einem flächigen Glaselement (2) mit einer Dicke von mindestens 2 Millimetern entlang einer vorgesehenen Trennlinie (21), welche das Glaselement (2) in ein abzutrennendes Teilstück (4) und einen zu verbleibenden Hauptteil (3) einteilt, wobei
- nebeneinander entlang der Trennlinie (21) filamentförmige Schädigungen (20) als Submikron-Hohlkanäle im Volumen des Glaselements (2) erzeugt werden, und
- die Schädigungen (20) durch Laserpulse (12) eines Ultrakurzpulslasers (10) erzeugt werden, wobei das Material des Glaselements (2) für die Laserpulse (12) transparent ist, und
- die Laserpulse (12) im Volumen des Glaselements (2) ein Plasma erzeugen, welches die filamentförmigen Schädigungen (20) hervorruft, und
- die Auftreffpunkte (13) der Laserpulse (12) auf dem Glaselement (2) über dessen Oberfläche (22) entlang der Trennlinie (21) bewegt werden, und
- nach dem Einfügen der nebeneinander entlang der Trennlinie (21) angeordneten filamentförmigen Schädigungen (20) das Glaselement (2) im Bereich des Hauptteils (3) erwärmt und zum Ausdehnen gebracht wird und/oder im Bereich des Teilstücks (4) abgekühlt und zum Zusammenziehen gebracht wird, so dass sich das Teilstück (4) entlang der Trennlinie (21) an den nebeneinander liegenden filamentförmigen Schädigungen (20) von dem Hauptteil (3) ablöst, wobei das Teilstück (4) und der Hauptteil (3) jeweils als Ganzes erhalten bleiben.

2. Verfahren nach dem vorstehenden Anspruch, wobei nach dem Einfügen der nebeneinander entlang der Trennlinie (21) angeordneten filamentförmigen Schädigungen ein Auftreffpunkt einer Laserstrahlung, vorzugsweise eines Kohlendioxidlasers, auf dem Glaselement (2) über dessen Oberfläche (22) entlang der Trennlinie (21) bewegt wird, so dass entlang der Trennlinie (21) lokale Zugspannungen im Glas hervorzurufen werden, um eine Rissbildung zwischen benachbarten filamentförmigen Schädigungen zu bewirken.

3. Verfahren nach einem der vorstehenden Ansprüche, wobei das Glaselement (2) im Bereich des Hauptteils (3) erwärmt und zum Ausdehnen gebracht wird und/oder im Bereich des Teilstücks (4) abgekühlt und zum Zusammenziehen gebracht wird, wobei zwischen der durchschnittlichen Temperatur des Hauptteils und der durchschnittlichen Temperatur des Teilstücks eine Temperaturdifferenz hervorgerufen wird, die mindestens 150 Grad Celsius, vorzugsweise mindestens 200 Grad Celsius, besonders bevorzugt mindestens 300 Grad Celsius beträgt.

4. Verfahren nach einem der vorstehenden Ansprüche, wobei das Glaselement (2) im Bereich des Hauptteils (3) erwärmt und zum Ausdehnen gebracht wird, und nachdem sich das Teilstück (4) entlang der Trennlinie (21) an den nebeneinander liegenden filamentförmigen Schädigungen (20) von dem Hauptteil (3) abgelöst hat, der Hauptteil (3) unter Ausnutzung der erfolgten Erwärmung thermisch vorgespannt wird.

5. Verfahren nach einem der vorstehenden Ansprüche, wobei das Material des Glaselements (2) einen Wärmeausdehnungskoeffizienten besitzt, der größer als 3×10⁻⁶ K⁻¹, vorzugsweise größer als 4×10⁻⁶ K⁻¹, besonders bevorzugt größer als 7×10⁻⁶ K⁻¹ ist.

6. Verfahren nach einem der vorstehenden Ansprüche, wobei das Glaselement (2) eine Dicke (23) von mindestens 3 Millimetern, besonders bevorzugt von mindestens 4 Millimetern, noch bevorzugter von mindestens 5 Millimetern aufweist.

7. Verfahren nach einem der vorstehenden Ansprüche, wobei das Teilstück (4), das von dem flächigen Glaselement (2) abgetrennt wird, entlang einer ersten lateralen Dimension (6) eine kleinste Abmessung (41) von mindestens 5 Millimetern, vorzugsweise von mindestens 10 Millimetern, besonders bevorzugt von mindestens 20 Millimetern hat und das Teilstück entlang einer zweiten lateralen Dimension (7), die orthogonal zur ersten lateralen Dimension ist, eine kleinste Abmessung (42) von mindestens 5 Millimetern, vorzugsweise von mindestens-10 Millimetern, besonders. bevorzugt von mindestens 20 Millimetern hat.

8. Verfahren nach einem der vorstehenden Ansprüche, wobei die kleinste Abmessung L des Teilstücks (4) in der Ebene des flächigen Glaselements (2), die Temperaturdifferenz ΔT in Kelvin, die zwischen der durchschnittlichen Temperatur des Hauptteils und der durchschnittlichen Temperatur des Teilstücks hervorgerufen wird, der Wärmeausdehnungskoeffizient α, den das Material des Glaselements (2) besitzt, und die mittlere Rauheit R der Kantenfläche des Teilstücks, an der sich das Teilstück von dem Hauptteil abtrennt, die Ungleichung L·ΔT·α > R erfüllt.

9. Verfahren nach einem der vorstehenden Ansprüche, wobei das flächige Glaselement (2) durch die Trennlinie (21) so eingeteilt wird, dass der Hauptteil (3) in der Ebene des flächigen Glaselements (2) eine zweidimensionale Form annimmt, die nicht sternförmig im mathematisch-topologischen Sinne ist.

10. Verfahren nach einem der vorstehenden Ansprüche, wobei das flächige Glaselement (2) durch die Trennlinie (21) so eingeteilt wird, dass der Hauptteil (3) das Teilstück (4) in der Ebene des flächigen Glaselements (2) vollständig umschließt.

11. Verfahren nach einem der vorstehenden Ansprüche, wobei nebeneinander entlang einer von der Trennlinie (21) um mindestens 5 und höchstens 50 Mikrometer beabstandeten Versatzlinie (21') filamentförmige Schädigungen (20') im Volumen des Glaselements (2) erzeugt werden, deren Projektion auf die Längsrichtung der entlang der Trennlinie (21) erzeugten filamentförmigen Schädigungen (20) eine Überlappung mit den entlang der Trennlinie (21) erzeugten filamentförmigen Schädigungen (20) von weniger als 200 Mikrometer aufweisen.

12. Verfahren nach einem der vorstehenden Ansprüche, wobei die Laserpulse (12) schräg auf die Oberfläche (22) des Glaselements (2) gerichtet werden, so dass die Lichtausbreitungsrichtung der Laserpulse (12) und damit auch die Längsrichtung der filamentförmigen Schädigungen (20) schräg zur Oberfläche (22) verlaufen und außerdem die Trennlinie (21) schräg, vorzugsweise senkrecht zur Lichteinfallsebene (15) verläuft.

13. Verfahren zum Entfernen eines Teilstücks (4) von einem flächigen Glaselement (2) mit einer Dicke von mindestens 2 Millimetern entlang einer vorgesehenen Trennlinie (21), welche das Glaselement (2) in das zu entfernende Teilstück (4) und einen zu verbleibenden Hauptteil (3) einteilt, wobei
- nebeneinander entlang der Trennlinie (21) filamentförmige Schädigungen (20) als Submikron-Hohlkanäle im Volumen des Glaselements (2) erzeugt werden, und
- die Schädigungen (20) durch Laserpulse (12) eines Ultrakurzpulslasers (10) erzeugt werden, wobei das Material des Glaselements (2) für die Laserpulse (12) transparent ist, und
- die Laserpulse (12) im Volumen des Glaselements (2) ein Plasma erzeugen, welches die filamentförmigen Schädigungen (20) hervorruft, und
- die Auftreffpunkte (13) der Laserpulse (12) auf dem Glaselement (2) über dessen Oberfläche (22) entlang der Trennlinie (21) bewegt werden, und
- nach dem Einfügen der nebeneinander entlang der Trennlinie (21) angeordneten filamentförmigen Schädigungen (20) das Glaselement (2) vorgespannt wird, und
- nach dem Vorspannen des Glaselements (2) im Bereich des Teilstücks (4) eine Rissbildung ausgelöst wird, deren Ausbreitung durch die entlang der Trennlinie (21) aufgereihten nebeneinander liegenden filamentförmigen Schädigungen (20) begrenzt wird, so dass das Teilstück (4) entlang der Trennlinie (21) an den nebeneinander liegenden filamentförmigen Schädigungen (20) von dem Hauptteil (3) entfernt werden kann, wobei der Hauptteil (3) als Ganzes erhalten bleibt.

## Claims

1. A method for separating a portion (4) from a sheet glass element (2) of a thickness of at least 2 millimetres along an intended separation line (21) which divides the glass element (2) into a portion (4) to be separated and a remaining main part (3), wherein
- filamentary defects (20) are produced in the volume of the glass element (2) in the form of sub-micron hollow channels adjacently aligned along the separation line (21); and
- the defects (20) are produced by laser pulses (12) of an ultrashort pulse laser (10), wherein the material of the glass element (2) is transparent for the laser pulses (12); and
- the laser pulses (12) generate a plasma within the volume of the glass element (2), which causes the filamentary defects (20); and
- the incidence points (13) of the laser pulses (12) on the glass element (2) are displaced over the surface (22) thereof along the separation line (21); and
- once the filamentary defects (20) adjacently aligned along the separation line (21) have been introduced, the glass element (2) is heated in the region of the main part (3) so as to cause expansion thereof and/or is cooled in the region of the portion (4) so as to cause contraction thereof, so that the portion (4) detaches from the main part (3) at the adjacently aligned filamentary defects (20) along the separation line (21), while the portion (4) and the main part (3) each remain intact as a whole.

2. The method according to the preceding claim, wherein once the filamentary defects (20) adjacently aligned along the separation line (21) have been introduced, a point of incidence of a laser radiation, preferably of a carbon dioxide laser, is displaced on the glass element (2) over the surface (22) thereof along the separation line (21) so as to cause local tensile stresses in the glass along the separation line (21) in order to cause crack formation between adjacent filamentary defects.

3. The method according to any one of the preceding claims, wherein the glass element (2) is heated in the region of the main part (3) so as to cause expansion thereof and/or is cooled in the region of the portion (4) so as to cause contraction thereof, thereby producing a temperature difference between the average temperature of the main part and the average temperature of the portion, which is at least 150 degrees Celsius, preferably at least 200 degrees Celsius, more preferably at least 300 degrees Celsius.

4. The method according to any one of the preceding claims, wherein the glass element (2) is heated in the region of the main part (3) so as to cause expansion thereof, and once the portion (4) has detached from the main part (3) at the adjacently aligned filamentary defects (20) along the separation line (21), the main part (3) is thermally toughened by exploiting the heating that has been caused.

5. The method according to any one of the preceding claims, wherein the material of the glass element (2) has a coefficient of thermal expansion greater than 3^{∗}10⁻⁶ K⁻¹, preferably greater than 4^{∗}10⁻⁶K⁻¹, more preferably greater than 7^{∗}10⁻⁶K⁻¹.

6. The method according to any one of the preceding claims, wherein the glass element (2) has a thickness (23) of at least 3 millimeters, more preferably at least 4 millimeters, yet more preferably at least 5 millimeters.

7. The method according to any one of the preceding claims, wherein the portion (4) which is separated from the sheet glass element (2) has a minimum extent (41) of at least 5 millimeters, preferably at least 10 millimeters, more preferably at least 20 millimeters along a first lateral dimension (6), and wherein the portion has a minimum extent (42) of at least 5 millimeters, preferably at least 10 millimeters, more preferably at least 20 millimeters along a second lateral dimension (7) that is orthogonal to the first lateral dimension,

8. The method according to any one of the preceding claims, wherein the minimum extent L of the portion (4) in the plane of the sheet glass element (2), the temperature difference ΔT in Kelvin caused between the average temperature of the main part and the average temperature of the portion, the coefficient of thermal expansion α of the material of the glass element (2), and the average roughness R of the edge surface of the portion along which the portion separates from the main part satisfy the inequation L·ΔT·α > R.

9. The method according to any one of the preceding claims, wherein the sheet glass element (2) is divided by the separation line (21) in such a manner that the main part (3) assumes a two-dimensional shape which is not star-shaped in a sense of mathematical topology in the plane of the sheet glass element (2).

10. The method according to any one of the preceding claims, wherein the sheet glass element (2) is divided by the separation line (21) in such a manner that the main part (3) completely encloses the portion (4) in the plane of the sheet glass element (2).

11. The method according to any one of the preceding claims, wherein filamentary defects (20') are produced in the volume of the glass element (2) adjacently aligned along an offset line (21') which is spaced from the separation line (21) by at least 5 and at most 50 micrometres, wherein a projection of said filamentary defects (20') onto the longitudinal extension of the filamentary defects (20) produced along the separation line (21) exhibits an overlap of less than 200 micrometres with the filamentary defects (20) produced along the separation line (21).

12. The method according to any one of the preceding claims, wherein the laser pulses (12) are directed obliquely onto the surface (22) of the glass element (2), so that the direction of light propagation of the laser pulses (12) and thus also the longitudinal extension of the filamentary defects (20) extend obliquely relative to the surface (22), and wherein furthermore the separation line (21) extends obliquely, preferably perpendicular to the light incidence plane (15).

13. A method for removing a portion (4) from a sheet glass element (2) of a thickness of at least 2 millimetres along an intended separation line (21) which divides the glass element (2) into the portion (4) to be removed and a remaining main part (3); wherein
- filamentary defects (20) are produced in the volume of the glass element (2) in the form of sub-micron hollow channels adjacently aligned along the separation line (21); and
- the defects (20) are produced by laser pulses (12) of an ultrashort pulse laser (10), wherein the material of the glass element (2) is transparent for the laser pulses (12); and
- the laser pulses (12) generate a plasma within the volume of the glass element (2), which causes the filamentary defects (20); and
- the incidence points (13) of the laser pulses (12) on the glass element (2) are displaced over the surface (22) thereof along the separation line (21); and
- once the filamentary defects (20) adjacently aligned along the separation line (21) have been introduced, the glass element (2) is toughened; and
- once the glass element (2) has been toughened, cracking is caused in the region of the portion (4) and propagation of the cracking is delimited by the filamentary defects (20) adjacently aligned along the separation line (21), so that the portion (4) can be removed from the main part (3) along the filamentary defects (20) adjacently aligned along the separation line (21) while the main part (3) remains intact as a whole.

## Revendications

1. Procédé pour séparer un fragment (4) d'un élément en verre (2) plat d'une épaisseur d'au moins 2 millimètres, le long d'une ligne de séparation (21) prévue qui sépare l'élément en verre (2) en un fragment (4) à séparer et une partie principale (3) à conserver, sachant que
- des dégradations (20) en forme de filaments, situées les unes à côté des autres le long de la ligne de séparation (21), sont générées sous forme de canaux creux submi-croniques dans le volume de l'élément en verre (2), et
- les dégradations (20) sont générées par des impulsions laser (12) d'un laser à impulsions ultracourtes (10), le matériau de l'élément en verre (2) étant transparent aux impulsions laser (12), et
- les impulsions laser (12) génèrent dans le volume de l'élément en verre (2), un plasma qui provoque les dégradations (20) en forme de filaments, et
- les points d'impact (13) des impulsions laser (12) sur l'élément en verre (2) sont déplacés sur la surface (22) de celui-ci, le long de la ligne de séparation (21), et
- après l'insertion des dégradations (20) en forme de filaments, disposées côte à côte le long de la ligne de séparation (21), l'élément en verre (2) est chauffé dans la région de la partie principale (3) et est amené à se dilater et/ou est refroidi et amené à se contracter dans la région du fragment (4), de sorte que le fragment (4) se détache de la partie principale (3), le long de la ligne de séparation (21), à l'endroit des dégradations (20) en forme de filaments disposées côte à côte, le fragment (4) et la partie principale (3) étant conservés chacun en tant qu'entité.

2. Procédé selon la revendication précédente, selon lequel, après l'insertion des dégradations en forme de filaments disposées côte à côte le long de la ligne de séparation (21), un point d'impact d'un rayonnement laser, de préférence d'un laser au dioxyde de carbone, est déplacé sur l'élément en verre (2), sur la surface de celui-ci, le long de la ligne de séparation (21), de sorte que des contraintes de traction locales sont engendrées dans le verre, le long de la ligne de séparation (21), aux fins de provoquer une fissuration entre des dégradations en forme de filaments adjacentes.

3. Procédé selon l'une des revendications précédentes, selon lequel l'élément en verre (2) est chauffé dans la région de la partie principale (3) et est amené à se dilater et/ou est refroidi dans la région du fragment (4) et est amené à se contracter, sachant que l'on crée entre la température moyenne de la partie principale et la température moyenne du fragment, une différence de température qui est d'au moins 150 degrés Celsius, de préférence d'au moins 200 degrés Celsius, et de façon particulièrement avantageuse d'au moins 300 degrés Celsius.

4. Procédé selon l'une des revendications précédentes, selon lequel l'élément en verre (2) est chauffé dans la région de la partie principale (3) et est amené à se dilater et, après que le fragment (4) s'est séparé de la partie principale (3) le long de la ligne de séparation (21), à l'emplacement des dégradations (20) en forme de filaments disposées les unes à côté des autres, la partie principale (3) est mise sous précontrainte thermique en utilisant le chauffage qui a eu lieu.

5. Procédé selon l'une des revendications précédentes, selon lequel le matériau de l'élément en verre (2) présente un coefficient de dilatation thermique qui est supérieur à 3 x 10⁻⁶ K⁻¹, de préférence supérieur à 4 x 10⁻⁶ K⁻¹, et de façon particulièrement avantageuse supérieur à 7 x 10⁻⁶ K⁻¹.

6. Procédé selon l'une des revendications précédentes, selon lequel l'élément en verre (2) présente une épaisseur (23) d'au moins 3 millimètres, notamment de préférence d'au moins 4 millimètres, et de façon particulièrement avantageuse d'au moins 5 millimètres.

7. Procédé selon l'une des revendications précédentes, selon lequel le fragment (4), qui est séparé de l'élément en verre (2) plat, présente, le long d'une première dimension latérale (6), une dimension minimale (41) d'au moins 5 millimètres, de préférence d'au moins 10 millimètres, et de façon particulièrement avantageuse d'au moins 20 millimètres, et le fragment présente, le long d'une deuxième dimension latérale (7) qui est orthogonale à la première dimension latérale, une dimension minimale (42) d'au moins 5 millimètres, de préférence d'au moins 10 millimètres, et de façon particulièrement avantageuse d'au moins 20 millimètres.

8. Procédé selon l'une des revendications précédentes, selon lequel la plus petite dimension L du fragment (4), dans le plan de l'élément en verre (2) plat, la différence de température ΔT en Kelvin, provoquée entre la température moyenne de la partie principale et la température moyenne du fragment, le coefficient de dilatation thermique α du matériau de l'élément en verre (2), et la rugosité R moyenne de la surface d'arête du fragment sur laquelle le fragment se sépare de la partie principale, satisfont l'inégalité L·ΔT·α > R.

9. Procédé selon l'une des revendications précédentes, selon lequel l'élément en verre (2) plat est divisé par la ligne de séparation (21) de manière telle que la partie principale (3) adopte, dans le plan de l'élément en verre (2) plat, une forme à deux dimensions qui n'a pas une forme d'étoile au sens mathématique-topologique.

10. Procédé selon l'une des revendications précédentes, selon lequel l'élément en verre (2) plat est divisé par la ligne de séparation (21) de manière telle que la partie principale (3) entoure complètement le fragment (4) dans le plan de l'élément en verre (2) plat.

11. Procédé selon l'une des revendications précédentes, selon lequel des dégradations (20') en forme de filaments sont générées les unes à côté des autres dans le volume de l'élément en verre (2), le long d'une ligne de décalage (21') espacée d'au moins 5 et d'au maximum 50 millimètres de la ligne de séparation (21), dégradations dont la projection sur la direction longitudinale des dégradations (20) en forme de filaments, générées le long de la ligne de séparation (21), présente un chevauchement de moins de 200 micromètres avec les dégradations (20) en forme de filaments générées le long de la ligne de séparation (21).

12. Procédé selon l'une des revendications précédentes, selon lequel les impulsions laser (12) sont dirigées en biais sur la surface (22) de l'élément en verre (2), de sorte que la direction de propagation de lumière des impulsions laser (12), et donc également la direction longitudinale des dégradations (20) en forme de filaments, s'étend en biais par rapport à la surface (22), et d'autre part la ligne de séparation (21) s'étend en biais, de préférence perpendiculairement au plan d'incidence de la lumière (15).

13. Procédé pour retirer un fragment (4) d'un élément en verre (2) plat d'une épaisseur d'au moins 2 millimètres, le long d'une ligne de séparation (21) prévue qui sépare l'élément en verre (2) en un fragment (4) à séparer et une partie principale (3) à conserver, sachant que
- des dégradations (20) en forme de filaments, situées les unes à côté des autres le long de la ligne de séparation (21), sont générées sous forme de canaux creux submi-croniques dans le volume de l'élément en verre (2), et
- les dégradations (20) sont générées par des impulsions laser (12) d'un laser à impulsions ultracourtes (10), le matériau de l'élément en verre (2) étant transparent aux impulsions laser (12), et
- les impulsions laser (12) générant dans le volume de l'élément en verre (2), un plasma qui provoque les dégradations (20) en forme de filaments, et
- les points d'impact (13) des impulsions laser (12) sur l'élément en verre (2) sont déplacés sur la surface (22) de celui-ci, le long de la ligne de séparation (21), et
- après l'insertion des dégradations (20) en forme de filaments disposées côte à côte le long de la ligne de séparation (21), l'élément en verre (2) est mis sous précontrainte, et
- après la mise sous précontrainte de l'élément en verre (2), on provoque dans la région du fragment (4) une fissuration dont la propagation est limitée par les dégradations (20) en forme de filaments alignées côte à côte le long de la ligne de séparation (21), de sorte que le fragment (4) peut être retiré de la partie principale (3) le long de la ligne de séparation (21), à l'endroit des dégradations (20) en forme de filaments disposées les unes à côté des autres, la partie principale (3) étant conservée en tant qu'entité.
